# EUROPEAN PATENT APPLICATION

(11) **EP 2 860 086 A1**
(43) Date of publication of application: **15.04.2015**
(21) Application number: 13800157.3
(22) Date of filing: 12.04.2013
(51) Int. Cl.: B62D 25/20, B62D 29/04

(54) **FIBRE-REINFORCED PLASTIC CABIN FOR VEHICLE**

(30) Priority: 08.06.2012 JP 2012130552; 08.06.2012 JP 2012130554; 08.06.2012 JP 2012130555; 20.06.2012 JP 2012138903
(71) Applicant: Honda Motor Co., Ltd., Minato-ku Tokyo 107-8556 (JP)
(72) Inventor: AYUZAWA Shotaro, Wako-shi Saitama 351-0193 (JP); YASUHARA Shigeto, Wako-shi Saitama 351-0193 (JP)
(74) Representative: Feller, Frank
(86) International application number: PCT/JP2013/061038
(87) International publication number: WO 2013/183359

(57) **Abstract**

An inclined surface (19b) which extends in the front-rear direction to boundaries of a floor panel (25) and a side sill (22) is formed in an inner skin (19) of a fibre-reinforced plastic cabin for a vehicle. As a result, when a bending moment (M) inwardly collapsing the side sill (22) in the vehicle width direction is exerted due to the impact force of a side-surface impact, collapsing of the side sill (22) can be inhibited without increasing the number and/or height of cross members (40). Furthermore, an outer skin (20) and the inclined surface (19b) of the inner skin (19) are joined to a frame member (59) which extends in the front-rear direction. As a result, deformation of the inclinded surface (19b) can be inhibited. Moreover, the bending moment (M) is consequently transferred to the outer skin (20) via the frame member (59), and thus collapsing of the side sill (22) can be more reliably inhibited.

## Description

### TECHNICAL FIELD

The present invention relates to a fiber-reinforced plastic cabin for a vehicle, in which a fiber-reinforced plastic cabin formed by joining an inner skin positioned on an inside of a vehicle compartment and an outer skin positioned on an outside of the vehicle compartment includes at least a floor panel and side sills connected to opposite sides in a vehicle width direction of the floor panel.

### BACKGROUND ART

A cabin for a vehicle molded into a bathtub shape from a carbon fiber-reinforced plastic (carbon fiber-reinforced resin) in which an energy-absorbing member, which is bent in a corrugated shape when viewed from the side, is disposed in a lower part of side sills rising upwardly from left and right edges of a floor panel of the cabin and, when involved in a side collision, energy is absorbed by the energy-absorbing member being crumpled by means of a load inputted into the side sill is known from Patent Document 1 below.

### RELATED ART DOCUMENTS

### PATENT DOCUMENTS

Patent Document 1: Japanese Patent No. 4840072

### SUMMARY OF THE INVENTION

### PROBLEMS TO BE SOLVED BY THE INVENTION

In the arrangement disclosed in Patent Document 1 above, the side sill of the cabin for a vehicle rises upwardly from the left and right edges of the floor panel; when an upper part of the side sill is involved in a side collision with a bumper of an SUV or a truck, which has a higher vehicle height than that of the subject vehicle, the upper part of the side sill is pushed by means of the collision load and collapses inwardly in the vehicle width direction, and there is a possibility that the energy-absorbing member will not be able to exhibit sufficient energy-absorbing performance.

In order to prevent the side sill from collapsing due to a side collision, reinforcing a part of a cross member joined to the side sill by providing a large number of cross members on the floor panel or increasing the height of a cross member could be considered, but if this is done there is the problem that the vehicle body weight increases or the volume of a vehicle compartment decreases.

The present invention has been accomplished in light of the above circumstances, and it is an object thereof to prevent a side sill of a fiber-reinforced plastic cabin from collapsing inwardly in the vehicle width direction when involved in a side collision.

### MEANS FOR SOLVING THE PROBLEMS

In order to attain the above object, according to a first aspect of the present invention, there is provided a fiber-reinforced plastic cabin for a vehicle, in which a fiber-reinforced plastic cabin formed by joining an inner skin positioned on an inside of a vehicle compartment and an outer skin positioned on an outside of the vehicle compartment comprises at least a floor panel and side sills connected to opposite sides in a vehicle width direction of the floor panel, wherein an inclined face extending in a fore-and-aft direction is formed in the inner skin on a border between the floor panel and the side sill, and the inclined face and the outer skin are joined by a frame member extending in the fore-and-aft direction.

Further, according to a second aspect of the present invention, in addition to the first aspect, the frame member is a tubular hollow member.

Furthermore, according to a third aspect of the present invention, in addition to the first or second aspect, the side sill is partitioned into an upper space and a lower space by means of a partition member, a front end and a rear end of the partition member are respectively connected to a front wall and a rear wall of the cabin, an upper energy-absorbing member is disposed within the upper space, and a lower energy-absorbing member is disposed within the lower space.

Moreover, according to a fourth aspect of the present invention, in addition to the third aspect, the floor panel is connected to the lower space, and the strength of the upper energy-absorbing member is set lower than the strength of the lower energy-absorbing member.

Further, according to a fifth aspect of the present invention, in addition to the third or fourth aspect, when the vehicle body is viewed from the side, the upper energy-absorbing member and the lower energy-absorbing member comprise a peak portion and a valley portion in a continuous zig-zag shape, and the valley portion of the upper energy-absorbing member and the peak portion of the lower energy-absorbing member oppose each other with the partition member interposed therebetween.

Furthermore, according to a sixth aspect of the present invention, in addition to any one of the first to fifth aspects, the floor panel comprises a core material sandwiched between the inner skin and the outer skin, a front half of the core material on the left and right sandwiching a vehicle body center line comprises a concave-convex portion formed into a ripple shape with as a center a front side of the side sill connected to the front half of the core material, and a rear half of the core material on the left and right sandwiching the vehicle body center line comprises a concave-convex portion formed into a ripple shape with as a center a rear side of the side sill connected to the rear half of the core material.

Moreover, according to a seventh aspect of the present invention, in addition to any one of the first to sixth aspects, an inner wall in a vehicle width direction of a front pillar lower front part connected to the front of the side sill widens on the inside in the vehicle width direction with respect to a vehicle width direction inner wall of the side sill.

Further, according to an eighth aspect of the present invention, in addition to the first aspect, the cabin comprises left and right rear side frames rising from a rear part of the side sill upwardly to the rear and extending to the rear, and a front end of a rear floor panel providing a connection between the left and right rear side frames and an upper wall of the side sill are linked by a first linking plate disposed within a rear part of the side sill and extending in a substantially horizontal direction.

Furthermore, according to a ninth aspect of the present invention, in addition to the eighth aspect, an interior of the rear side frame is partitioned into an upper space and a lower space by a rear partition member, and a front end of the rear partition member is linked to a rear end of the first linking plate.

Moreover, according to a tenth aspect of the present invention, in addition to the eighth or ninth aspect, an interior of the side sill is partitioned into an upper space and a lower space by a front partition member, an energy-absorbing member is disposed in each of the upper space and the lower space of the side sill, the inclined face extending in the fore-and-aft direction is formed on the border between the side sill and the front floor panel connecting the left and right side sills, and a core material is disposed in the interior of the front floor panel.

Further, according to an eleventh aspect of the present invention, in addition to any one of the eighth to tenth aspects, a second linking plate extending in a substantially horizontal direction is disposed above the first linking plate within the rear part of the side sill.

Furthermore, according to a twelfth aspect of the present invention, in addition to any one of the eighth to eleventh aspects, a core material having a concave-convex portion extending in the vehicle width direction is disposed in an interior of a kick-up part rising from a rear end of the front floor panel toward the front end of the rear floor panel, a partition wall portion formed by extending opposite ends in the vehicle width direction of the core material of the kick-up part is inserted into the interior of the side sill, and the rear end of the first linking plate is linked to the partition wall portion.

Moreover, according to a thirteenth aspect of the present invention, in addition to the twelfth aspect, the partition wall portion formed from a fiber-reinforced plastic extends upwardly from the core material of the kick-up part and is connected to the upper wall of the side sill, and the partition wall portion has at least a fiber orientation direction that is inclined downwardly from the outside to the inside in the vehicle width direction.

Further, according to a fourteenth aspect of the present invention, in addition to the first aspect, a vertical wall positioned at a front end of the cabin and a front pillar lower connected to the outside in the vehicle width direction of the vertical wall are formed by joining the inner skin and the outer skin, a first insert member inserted into the front pillar lower comprises a first fastening portion positioned in the vicinity of a border between the first insert member and the vertical wall, and the vertical wall and a damper housing disposed in front of the front pillar lower are secured to the first fastening portion.

Furthermore, according to a fifteenth aspect of the present invention, in addition to the fourteenth aspect, the damper housing, the outer skin, the first fastening portion, and the inner skin are superimposed on one another and secured by a bolt.

Moreover, according to a sixteenth aspect of the present invention, in addition to the fifteenth aspect, the first insert member comprises a second fastening portion on the outside in the vehicle width direction relative to the first fastening portion, and the damper housing is secured to the second fastening portion by a bolt.

Further, according to a seventeenth aspect of the present invention, in addition to the sixteenth aspect, the inner skin of the front pillar lower comprises a front pillar inner wall and a wheel house rear wall that is continuous with the underneath of the front pillar inner wall via a bent portion, the first insert member comprises a third fastening portion positioned adjacent to the bent portion, and the damper housing is secured to the third fastening portion by a bolt.

Furthermore, according to an eighteenth aspect of the present invention, in addition to the seventeenth aspect, the first fastening portion, the second fastening portion, and the third fastening portion are disposed in a triangular shape.

Moreover, according to a nineteenth aspect of the present invention, in addition to any one of the fourteenth to eighteenth aspects, the vertical wall comprises a corrugated core material sandwiched between the inner skin and the outer skin, a second insert member is inserted into the vertical wall, which is beneath the first insert member and in the vicinity of a wheel house rear wall of the front pillar lower, a concave-convex portion of the core material abuts against the second insert member, and a front side frame is secured to the second insert member.

Further, according to a twelfth aspect of the present invention, in addition to the nineteenth aspect, the front side frame is formed so as to be integral with the damper housing.

Furthermore, according to a twenty-first aspect of the present invention, in addition to the nineteenth or twelfth aspect, the cabin comprises the side sill connected to the rear of the front pillar lower, and a front end of a linking plate extending forwardly from a lower face of the upper wall of the side sill is connected to the wheel house rear wall of the front pillar lower.

Moreover, according to a twenty-second aspect of the present invention, in addition to the twenty-first aspect, a front side of the linking plate widens on the inside in the vehicle width direction in going toward the second insert member.

Further, according to a twenty-third aspect of the present invention, in addition to the twenty-first or twenty-second aspect, the cabin comprises a partition member partitioning the interior of the side sill into an upper space and a lower space, and a front end of the partition member is connected to the wheel house rear wall.

Furthermore, according to a twenty-fourth aspect of the present invention, in addition to the fourteenth aspect, the vertical wall of the cabin comprises a wheel house rear wall that extends from a front side frame fastening part to a front end of the side sill while curving rearwardly therefrom, the front side frame fastening part securing a front side frame, and an upper wall of the side sill and the wheel house rear wall are linked by a linking plate extending in a substantially horizontal direction.

Moreover, according to a twenty-fifth aspect of the present invention, in addition to the twenty-fourth aspect, the width in the left-and-right direction of the linking plate increases in going from the side sill side to the wheel house rear wall side so as to approach the front side frame fastening part.

Further, according to a twenty-sixth aspect of the present invention, in addition to the twenty-fifth aspect, the interior of the side sill is partitioned into an upper space and a lower space by a partition member extending in a substantially horizontal direction, and a front end of the partition member is linked to the wheel house rear wall.

Furthermore, according to a twenty-seventh aspect of the present invention, in addition to the twenty-sixth aspect, the front side frame fastening part is formed from an upper fastening portion and a lower fastening portion, the linking plate is linked to the wheel house rear wall at a height that is substantially the same as that of the upper fastening portion, and the partition member is linked to the wheel house rear wall at a height that is substantially the same as that of the lower fastening portion.

Moreover, according to a twenty-eighth aspect of the present invention, in addition to the twenty-sixth or twenty-seventh aspect, an energy-absorbing member is disposed in each of the upper space and the lower space of the side sill.

A front side frame front part 13 and a front side frame rear part 31 of an embodiment correspond to the front side frame of the present invention, a dash panel 21 of the embodiment corresponds to the front wall of the present invention, a front floor panel 25 of the embodiment corresponds to the floor panel of the present invention, a kick-up part 26 of the embodiment corresponds to the rear wall of the present invention, a front side frame rear part 31 of the embodiment corresponds to the front side frame of the present invention, a front pillar lower front part 33 of the embodiment corresponds to the front pillar lower of the present invention, a front pillar inner wall 33b of the embodiment corresponds to the inner wall in the vehicle width direction of the present invention, a front partition member 47 of the embodiment corresponds to the partition member of the present invention, a front linking plate 48 of the embodiment corresponds to the linking plate of the present invention, a rear first linking plate 49 of the embodiment corresponds to the first linking plate of the present invention, a rear second linking plate 50 of the embodiment corresponds to the second linking plate of the present invention, an upper energy-absorbing member 52 and a lower energy-absorbing member 53 of the embodiment correspond to the energy-absorbing member of the present invention, a first insert member 54 of the embodiment corresponds to the front side frame fastening part of the present invention, a bolt hole 54a and a female threaded hole 54b of the embodiment correspond to the upper fastening part of the present invention, a bolt hole 54c and a female threaded hole 54d of the embodiment correspond to the lower fastening part of the present invention, and first to third bolt holes 154a to 154c of the embodiment correspond to the first to third fastening parts respectively of the present invention.

### EFFECTS OF THE INVENTION

In accordance with the first aspect of the present invention, the fiber-reinforced plastic cabin, which includes at least the floor panel and the left and right side sills, is formed by joining the inner skin positioned on the inside of the vehicle compartment and the outer skin positioned on the outside of the vehicle compartment. Since the inclined face extending in the fore-and-aft direction is formed in the inner skin on the border between the floor panel and the side sill, when a bending moment that works so as to collapse the side sill inwardly in the vehicle width direction is applied by means of the collision load of a side collision, it is possible, without increasing the number of cross members or increasing the height of a cross member, to prevent the side sill from collapsing by means of the inclined face of the inner skin transmitting the bending moment to the floor panel and supporting it. Furthermore, since the inclined face of the inner skin and the outer skin are joined to the frame member extending in the fore-and-aft direction, not only is it possible to suppress deformation of the inclined face, but it is also possible to further reliably prevent the side sill from collapsing by transmitting the bending moment to the outer skin via the frame member.

Moreover, in accordance with the second aspect of the present invention, since the frame member is a tubular hollow member, it is possible to easily produce the frame member by extrusion molding or draw molding.

Furthermore, in accordance with the third aspect of the present invention, since the side sill is partitioned into the upper space and the lower space by means of the partition member, and the front end and the rear end of the partition member are connected to the front wall and the rear wall respectively of the cabin, it is possible to reinforce the side sill by means of the partition member and to disperse and absorb the collision load of a side collision inputted into the side sill between the front wall and the rear wall of the cabin. Moreover, since the upper energy-absorbing member is disposed within the upper space, and the lower energy-absorbing member is disposed within the lower space, it is possible to absorb effectively the collision energy by the upper energy-absorbing member and the lower energy-absorbing member being crumpled by means of the collision load.

Furthermore, in accordance with the fourth aspect of the present invention, since the floor panel is connected to the lower space, the side sill is easily made to collapse inwardly in the vehicle width direction by means of the collision load of a side collision, but since the strength of the upper energy-absorbing member is set lower than the strength of the lower energy-absorbing member, the upper energy-absorbing member, which is normally difficult to crumple, and the lower energy-absorbing member, which is normally easy to crumple, are crumpled evenly, and it is thus possible to exhibit the maximum energy-absorbing effect while minimizing collapsing of the side sill inwardly in the vehicle width direction.

Moreover, in accordance with the fifth aspect of the present invention, when the vehicle body is viewed from the side, since the upper energy-absorbing member and the lower energy-absorbing member have the peak portions and the valley portions in a continuous zig-zag shape, and the valley portions of the upper energy-absorbing member and the peak portions of the lower energy-absorbing member oppose each other with the partition member therebetween, the valley portions and the peak portions are integrated via the partition member, the upper energy-absorbing member, the lower energy-absorbing member, and the partition member thus forming a large number of strong triangular shapes. This enables the energy-absorbing effect to be enhanced by reliably crumpling the upper energy-absorbing member, the lower energy-absorbing member, and the partition member when a concentrated collision load is inputted into the side sill as a result of collision with a pole, etc.

Furthermore, in accordance with the sixth aspect of the present invention, not only is it possible to enhance the strength of the floor panel by means of the core material since the floor panel includes the core material sandwiched between the inner skin and the outer skin, but it is also possible to disperse the load of a side collision inputted into an intermediate part in the fore-and-aft direction of the side sill, between the front part and the rear part of the cabin, via the concave-convex parts of the front half and the rear half of the core material to thus efficiently absorb it since the front halves of the left and right core materials sandwiching the vehicle body center line include the concave-convex parts formed into ripple shapes with the front side of the side sill connected thereto as a center, and the rear halves of the left and right core materials sandwiching the vehicle body center line include the concave-convex parts formed into ripple shapes with the rear side of the side sill connected thereto as a center.

Moreover, in accordance with the seventh aspect of the present invention, since the inner wall in the vehicle width direction of the front pillar lower front part connected to the front of the side sill widens on the inside in the vehicle width direction with respect to the inner wall in the vehicle width direction of the side sill, when the load of a side collision inputted into the side sill is transmitted to the front pillar lower front part, it is possible by means of the front pillar lower front part, whose strength has increased, to prevent further effectively the side sill from collapsing.

Furthermore, in accordance with the eighth aspect of the present invention, the cabin includes the left and right rear side frames rising upwardly to the rear from the rear part of the side sill and extending rearwardly. Since the front end of the rear floor panel providing a connection between the left and right rear side frames and the upper wall of the side sill are linked by the first linking plate disposed within the rear part of the side sill and extending in a substantially horizontal direction, not only is it possible, by enhancing the strength of the rear part of the side sill rising upwardly to the rear by means of the first linking plate, to prevent, by means of the first linking plate, the rear part of the side sill from crumpling due to a collision load even when the rear part of the side sill is involved in a side collision with a vehicle having a large vehicle height such as an SUV, but it is also possible to efficiently transmit the collision load to the rear side frame and the rear floor panel, thereby preventing the side sill from collapsing inwardly in the vehicle width direction.

Moreover, in accordance with the ninth aspect of the present invention, since the interior of the rear side frame is partitioned into the upper space and the lower space by means of the rear partition member, and the front end of the rear partition member is linked to the rear end of the first linking plate, not only is it possible by means of the rear partition member to prevent the rear side frame from being crumpled by the collision load of a side collision, but it is also possible to further efficiently disperse, from the rear side frame to the rear floor panel, the collision load of a side collision inputted into the side sill.

Furthermore, in accordance with the tenth aspect of the present invention, since the interior of the side sill is partitioned into the upper space and the lower space by means of the partition member, and the energy-absorbing member is disposed in each of the upper space and the lower space of the side sill, it is possible to absorb collision energy effectively by the upper energy-absorbing member and the lower energy-absorbing member being crumpled by means of the collision load of a side collision inputted into the side sill. Moreover, since the inclined face extending in the fore-and-aft direction is formed on the border between the side sill and the front floor panel connecting the left and right side sills, and the core material is disposed in the interior of the front floor panel, when a bending moment from the collision load of a side collision works to collapse the side sill inwardly in the vehicle width direction, the inclined face transmits the bending moment to the front floor reinforced by the core material to thus support it, and it is thereby possible to prevent the side sill from collapsing without increasing the number of cross members or increasing the height of a cross member.

Furthermore, in accordance with the eleventh aspect of the present invention, since the second linking plate extending in a substantially horizontal direction above the first linking plate is disposed within the rear part of the side sill, it is possible, by cooperation of the first linking plate and the second linking plate, to further reliably prevent the rear part of the side sill from crumpling when a collision load is inputted into the rear part of the side sill.

Moreover, in accordance with the twelfth aspect of the present invention, since the core material having the concave-convex portions extending in the vehicle width direction is disposed the interior of the kick-up part rising from the rear end of the front floor panel toward the front end of the rear floor panel, the partition wall portion formed by extending the opposite ends in the vehicle width direction of the core material of the kick-up part is inserted into the interior of the side sill, and the rear end of the first linking plate is linked to the partition wall portion, when the collision load of a side collision is inputted into the rear part of the side sill, it is possible by means of the partition wall portion formed by extending the core material to prevent the side sill and the rear side frame from crumpling, and it is also possible to efficiently transmit the collision load to the kick-up part and support it.

Furthermore, in accordance with the thirteenth aspect of the present invention, since the partition wall portion formed from a fiber-reinforced plastic extends upwardly from the core material of the kick-up part and is connected to the upper wall of the side sill, and the partition wall portion has at least a fiber orientation direction that is inclined downwardly from the outside toward the inside in the vehicle width direction, when the collision load of a side collision is inputted into the upper part of the side sill, it is possible to efficiently transmit the collision load to the core material of the kick-up part via the obliquely oriented fibers in the partition wall portion.

Moreover, in accordance with the fourteenth aspect of the present invention, with regard to the fiber-reinforced plastic cabin for a vehicle, the vertical wall positioned at the front end and the front pillar lower connected to the outside in the vehicle width direction of the vertical wall are formed by joining the inner skin positioned on the inside of the vehicle compartment and the outer skin positioned on the outside of the vehicle compartment. Since the first insert member inserted into the front pillar lower includes the first fastening part positioned in the vicinity of the border with the vertical wall, and the vertical wall and the damper housing disposed in front of the front pillar lower are secured to the first fastening part, it is possible to reliably transmit the collision load of a frontal collision inputted into the damper housing to the center pillar lower via the first insert member to thus efficiently absorb it.

Furthermore, in accordance with the fifteenth aspect of the present invention, since the damper housing, the outer skin, the first fastening part, and the inner skin are superimposed and secured by means of the bolt, it is possible to strongly integrate the outer skin, the first fastening part, and the inner skin, and to reliably transmit the collision load of a frontal collision inputted into the damper housing to the front pillar lower via the front wall.

Moreover, in accordance with the sixteenth aspect of the present invention, since the first insert member includes the second fastening part on the outside of the first fastening part in the vehicle width direction, and the damper housing is secured to the second fastening part by means of the bolt, it is possible to reliably transmit to the front pillar lower the collision load of a frontal collision inputted from the damper housing into the first insert member.

Furthermore, in accordance with the seventeenth aspect of the present invention, since the inner skin of the front pillar lower includes the front pillar inner wall and the wheel house rear wall continuous with the underneath of the front pillar inner wall via the bent portion, the first insert member includes the third fastening part at a position adjacent to the bent portion, and the damper housing is secured to the third fastening part by means of the bolt, it is possible to reinforce the third fastening part by means of the bent portion, which has a high strength, formed on the border between the front pillar inner wall and the wheel house rear wall, thus reliably transmitting to the front pillar lower the collision load of a frontal collision inputted into the first insert member from the damper housing.

Moreover, in accordance with the eighteenth aspect of the present invention, since the first fastening part, the second fastening part, and the third fastening part are disposed in a triangular shape, it is possible to disperse the collision load of a frontal collision inputted into the damper housing to the first insert member, thus efficiently transmitting it to the front pillar lower part.

Furthermore, in accordance with the nineteenth aspect of the present invention, since the vertical wall includes the corrugated core material sandwiched between the inner skin and the outer skin, the second insert member is inserted into the vertical wall beneath the first insert member and in the vicinity of the wheel house rear wall of the front pillar lower, the concave-convex portions of the core material abut against the second insert member, and the front side frame is secured to the second insert member, it is possible to reliably transmit, to the front wall via the core material, the collision load of a frontal collision inputted from the front side frame rear into the second insert member and to further transmit it therefrom to the wheel house rear wall of the front pillar lower and efficiently absorb it.

Moreover, in accordance with the twentieth aspect of the present invention, since the front side frame is formed integrally with the damper housing, it is possible to disperse the collision load of a frontal collision to the first insert member and the second insert member to thus transmit it to the entire front wall, thus enabling the weight to be lightened without making it necessary to enhance the strength of the front wall to the full extent.

Furthermore, in accordance with the twenty-first aspect of the present invention, since the cabin includes the side sill connected to the rear of the front pillar lower, and the front end of the linking plate extending forwardly from the lower face of the upper wall of the side sill is connected to the wheel house rear wall of the front pillar lower, it is possible to efficiently transmit, to the side sill from the wheel house rear wall via the linking plate, the collision load of a frontal collision inputted into the second insert member from the front side frame, thus preventing the front wall from moving back toward the vehicle compartment side.

Moreover, in accordance with the twenty-second aspect of the present invention, since the front side of the linking plate widens inwardly in the vehicle width direction toward the second insert member, it is possible to further efficiently transmit, from the wheel house rear wall to the side sill via the linking plate, the collision load of a frontal collision inputted into the second insert member.

Furthermore, in accordance with the twenty-third aspect of the present invention, since the partition member is provided so as to partition the interior of the side sill into the upper space and the lower space, and the front end of the partition member is connected to the wheel house rear wall, it is possible, in cooperation with the linking plate, to efficiently transmit, from the wheel house rear wall to the side sill via the partition member, the collision load of a frontal collision inputted into the second insert member from the front side frame, thus preventing the front wall from moving back toward the vehicle compartment side.

Moreover, in accordance with the twenty-fourth aspect of the present invention, the vertical wall of the cabin includes the wheel house rear wall extending from the front side frame fastening part securing the front side frame to the front end of the side sill while curving rearwardly. Since the upper wall of the side sill and the wheel house rear wall are linked by means of the linking plate extending in a substantially horizontal direction, it is possible to prevent the dash panel from collapsing rearwardly by efficiently transmitting, to the upper wall of the side sill via the linking plate, a collision load inputted from a tire into the wheel house rear wall and support it, in particular when there is a narrow offset frontal collision, thus enabling the vehicle compartment space to be maintained.

Furthermore, in accordance with the twenty-fifth aspect of the present invention, since the width in the left-and-right direction of the linking plate increases from the side sill side in going toward the wheel house rear wall so as to approach the front side frame fastening part, it is possible to efficiently transmit, from the wheel house rear wall to the side sill, the collision load of a frontal collision inputted into the dash panel.

Moreover, in accordance with the twenty-sixth aspect of the present invention, since the interior of the side sill is partitioned into the upper space and the lower space by means of the partition member extending in a substantially horizontal direction, and the front end of the partition member is linked to the wheel house rear wall, it is possible to efficiently transmit, from the wheel house rear wall to the side sill via the partition member, the collision load of a frontal collision inputted into the wheel house rear wall.

Furthermore, in accordance with the twenty-seventh aspect of the present invention, since the front side frame fastening part is formed from the upper fastening part and the lower fastening part, the linking plate is linked to the wheel house rear wall at the height that is substantially the same as that of the upper fastening part, and the partition member is linked to the wheel house rear wall at the height that is substantially the same as that of the lower fastening part, it is possible to further efficiently transmit, from the wheel house rear wall to the side sill via the linking plate and the partition member, the collision load of a frontal collision inputted from the front side frame into the front side frame fastening part.

Moreover, in accordance with the twenty-eighth aspect of the present invention, since the energy-absorbing member is disposed in each of the upper space and the lower space of the side sill, it is possible, by integrally joining the inner face of the side sill and the partition member by means of the energy-absorbing member, to thus enhance the bending stiffness, thereby further reliably supporting the collision load of a frontal collision.

### BRIEF DESCRIPTION OF DRAWINGS

[FIG. 1] FIG. 1 is a perspective view of a CFRP cabin for a vehicle. (first embodiment)
[FIG. 2] FIG. 2 is a perspective view of the cabin with an inner skin removed. (first embodiment)
[FIG. 3] FIG. 3 is a view in the direction of arrow 3 in Fig. 2. (first embodiment)
[FIG. 4] FIG. 4 is a sectional view along line 4-4 in FIG. 3. (first embodiment)
[FIG. 5] FIG. 5 is a sectional view along line 5-5 in FIG. 4. (first embodiment)
[FIG. 6] FIG. 6 is a sectional view along line 6-6 in FIG. 4. (first embodiment)
[FIG. 7] FIG. 7 is a view in the direction of arrow 7 in Fig. 3. (first embodiment)
[FIG. 8] FIG. 8 is a view in the direction of arrow 8 in Fig. 3. (first embodiment)
[FIG. 9] FIG. 9 is a perspective view of a front part of a cabin with an inner skin removed. (second embodiment)
[FIG. 10] FIG. 10 is a view in the direction of arrow 10 in Fig. 9. (second embodiment)
[FIG. 11] FIG. 11 is a diagram, corresponding to FIG. 10, for explaining the operation. (second embodiment)
[FIG. 12] FIG. 12 is a sectional view along line 12-12 in FIG. 9. (second embodiment)
[FIG. 13] FIG. 13 is a sectional view along line 13-13 in FIG. 12. (second embodiment)

### EXPLANATION OF REFERENCE NUMERALS AND SYMBOLS

- 11: Cabin
- 13: Front side frame front part (front side frame)
- 19: Inner skin
- 19b: Inclined face
- 20: Outer skin
- 21: Dash panel (front wall)
- 22: Side sill
- 22a: Upper space
- 22b: Lower space
- 22c: Inner wall
- 22e: Upper wall
- 23: Rear side frame
- 23a: Upper space
- 23b: Lower space
- 25: Front floor panel (floor panel)
- 26: Kick-up part (rear wall)
- 27: Rear floor panel
- 31: Front side frame rear part (front side frame)
- 32: Damper housing
- 33: Front pillar lower front part (front pillar lower)
- 33a: Wheel house rear wall
- 33b: Front pillar inner wall (vehicle width direction inner wall)
- 33c: Bent portion
- 38: Vertical wall
- 42: Core material
- 42a: Concave-convex portion
- 42c: Concave-convex portion
- 44: Core material
- 44a: Concave-convex portion
- 45: Core material
- 45a: Concave-convex portion
- 45b: Partition wall portion
- 47: Front partition member (partition member)
- 48: Front linking plate (linking plate)
- 49: Rear first linking plate (first linking plate)
- 50: Rear second linking plate (second linking plate)
- 51: Rear partition member
- 52: Upper energy-absorbing member (energy-absorbing member)
- 52a: Peak portion
- 52b: Valley portion
- 53: Lower energy-absorbing member (energy-absorbing member)
- 53a: Peak portion
- 53b: Valley portion
- 54: First insert member (front side frame fastening part)
- 54a: Bolt hole (upper fastening portion)
- 54b: Female threaded hole (upper fastening portion)
- 54c: Bolt hole (lower fastening portion)
- 54d: Female threaded hole (lower fastening portion)
- 59: Frame member
- 154: First insert member
- 154a: First bolt hole (first fastening portion)
- 154b: Second bolt hole (second fastening portion)
- 154c: Third bolt hole (third fastening portion)
- 155: Second insert member
- 156A: Bolt
- 156B: Bolt
- 156C: Bolt
- O1: Center on front side of side sill
- 02: Center on rear side of side sill

### MODES FOR CARRYING OUT THE INVENTION

Modes for carrying out the present invention are explained below by reference to the attached drawings.

### FIRST EMBODIMENT

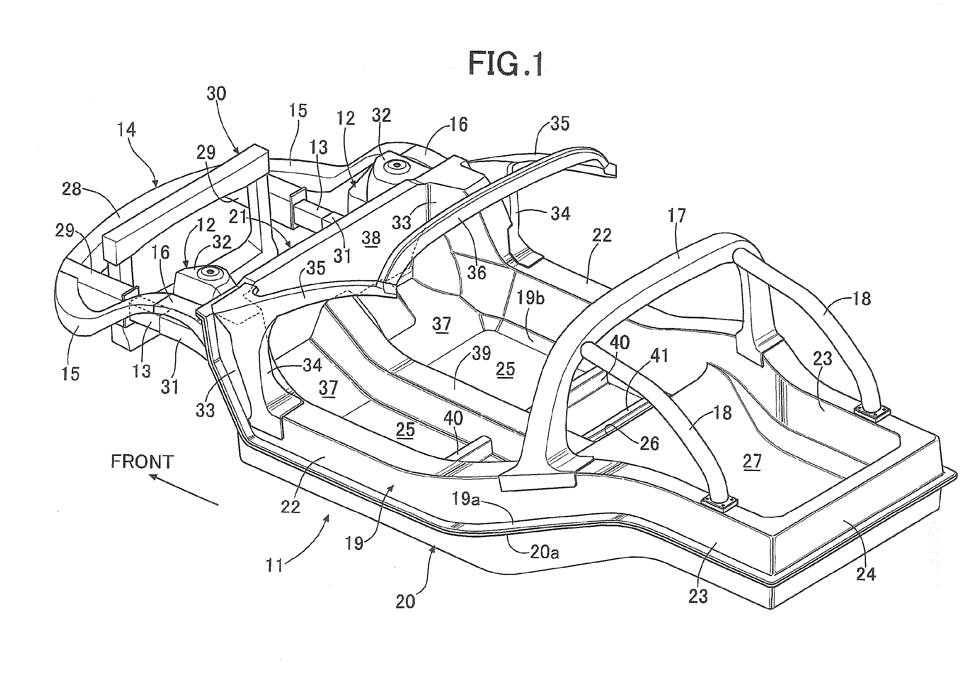

A first embodiment of the present invention is now explained by reference to FIG. 1 to FIG. 8. The fore-and-aft direction, the left-and-right direction (vehicle width direction), and the up-and-down direction in the present specification are with reference to a driver seated on a driver's seat.

As shown in FIG. 1, a vehicle body frame of a vehicle includes a cabin 11 formed into a bathtub shape from a carbon fiber-reinforced resin (CFRP), a pair of left and right suspension support modules 12 and 12, which are aluminum alloy castings connected to the front end of the cabin 11, a pair of left and right front side frame front parts 13 and 13, which are aluminum alloy extrusions extending forwardly from the front ends of the suspension support modules 12 and 12, a carbon fiber-reinforced plastic front end module 14 supported at the front ends of the front side frame front parts 13 and 13, a pair of left and right carbon fiber-reinforced plastic lower members 15 and 15 extending upwardly to the rear from left and right ends of the front end module 14, a pair of left and right carbon fiber-reinforced plastic upper members 16 and 16 extending upwardly to the rear from the rear ends of the lower members 15 and 15 and connected to the front end of the cabin 11, a carbon fiber-reinforced plastic roll bar 17 standingly providing on a rear upper face of the cabin 11, and a pair of left and right carbon fiber-reinforced plastic stays 18 and 18 reinforcing the roll bar 17 by supporting it from the rear.

The cabin 11 is a hollow structure formed by joining an inner skin 19 and an outer skin 20 one above the other, and includes a dash panel 21 at the front end, a pair of left and right side sills 22 and 22 extending rearwardly from opposite ends in the vehicle width direction of the dash panel 21, a pair of left and right rear side frames 23 and 23 extending upwardly to the rear from the rear ends of the side sills 22 and 22, a rear end cross member 24 providing a connection between the rear ends of the rear side frames 23 and 23 in the vehicle width direction, a front floor panel 25 providing a connection between the dash panel 21 and the left and right side sills 22 and 22, a kick-up part 26 rising from the rear end of the front floor panel 25, and a rear floor panel 27 extending rearwardly from the upper end of the kick-up part 26 and connected to the rear side frames 23 and 23 and the rear end cross member 24.

The front end module 14 includes a bumper beam 28 extending in the vehicle width direction, a pair of left and right bumper beam extensions 29 and 29 extending rearwardly from opposite end parts in the vehicle width direction of the bumper beam 28 and connected to the front ends of the front side frame front parts 13 and 13, and a frame-shaped front bulkhead 30 supported between the bumper beam extensions 29 and 29. Each suspension support module 12 integrally includes a front side frame rear part 31 connected to the rear end of the front side frame front part 13 and a front face of the dash panel 21, and a damper housing 32 extending upwardly and outwardly in the vehicle width direction from the front side frame rear part 31 and connected to the front face of the dash panel 21. Left and right end parts of the dash panel 21 form a pair of left and right front pillar lower front parts 33 and 33 rising upwardly from the front ends of the side sills 22 and 22. A pair of left and right metal front pillar lower rear parts 34 and 34 and a pair of left and right metal front pillar uppers 35 and 35 are connected to rear faces of the front pillar lower front parts 33 and 33, and the upper ends of the left and right front pillar uppers 35 and 35 are connected to each other by a metal front roof arch 36, which extends in the vehicle width direction.

The dash panel 21 includes an inclined wall 37 extending obliquely upwardly from the front end of the front floor panel 25, and a vertical wall 38 extending upwardly from the front end of the inclined wall 37. A floor tunnel 39 extending in the fore-and-aft direction bulges upwardly from middle parts in the vehicle width direction of the inner skin 19 and the outer skin 20 forming upper and lower faces of the front floor panel 25 and the inclined wall 37 of the dash panel 21. Furthermore, a front cross member 40 and a rear cross member 41, which intersect the floor tunnel 39 and extend in the vehicle width direction, bulge upwardly from the inner skin 19 forming the upper face of the front floor panel 25. On the other hand, the rear floor panel 27 is formed so that the inner skin 19 and the outer skin 20 are both flat.

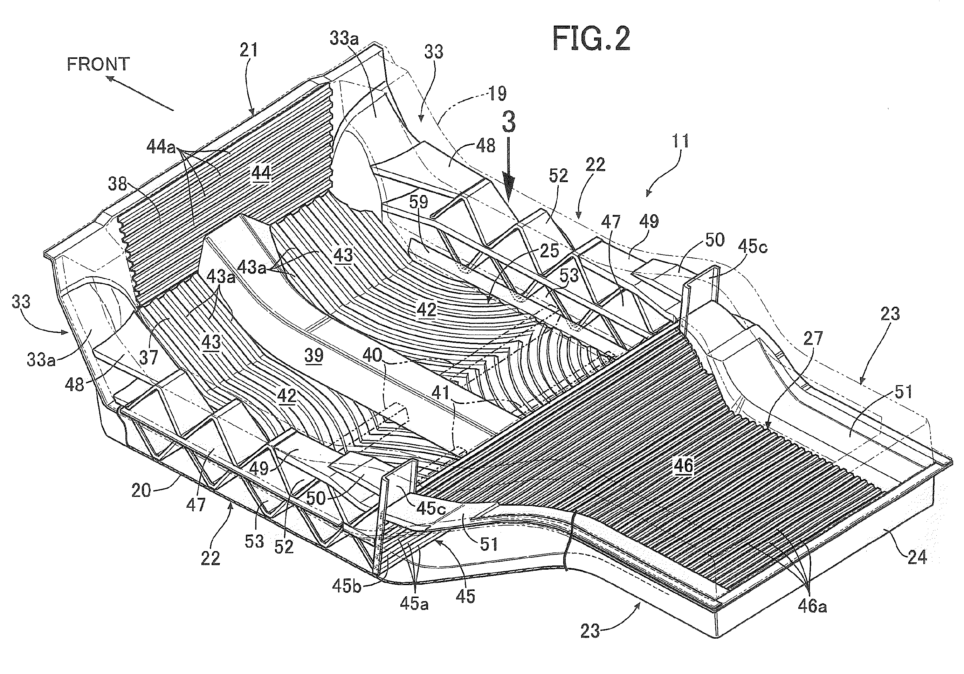

The structure of the cabin 11 is now explained in detail by reference to FIG. 2 to FIG. 8.

The inner skin 19 and the outer skin 20 forming the cabin 11 include joining flanges 19a and 20a extending so as to surround outer peripheries of the dash panel 21, the left and right side sills 22 and 22, the left and right rear side frames 23 and 23, and the rear end cross member 24, the two joining flanges 19a and 20a being joined by adhesion, fusion, riveting, etc.

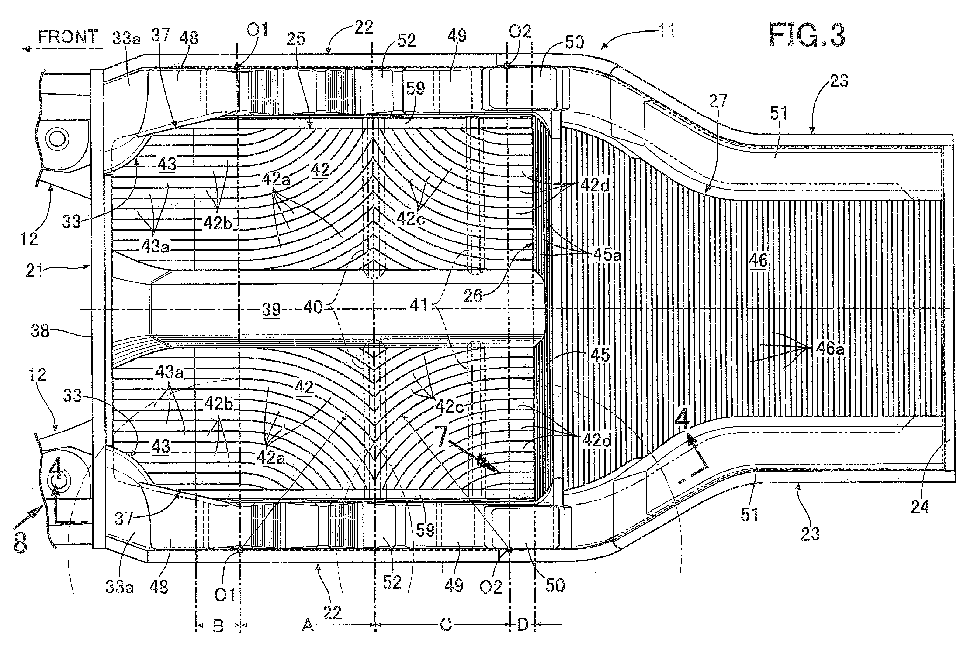

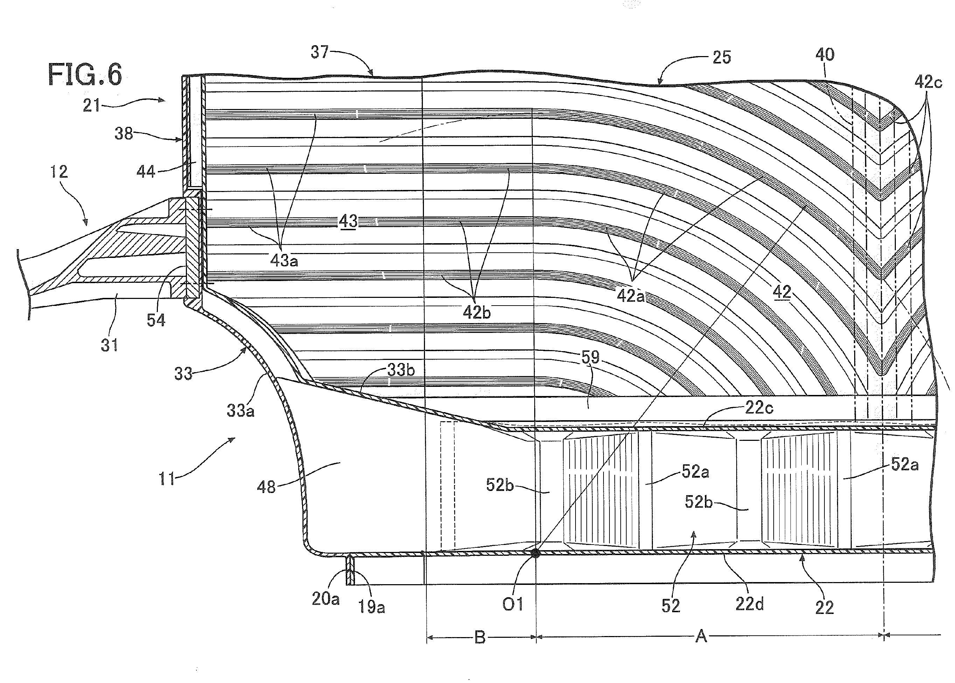

The front floor panel 25 includes left and right core materials 42 and 42 formed from a corrugated plate and sandwiched between the inner skin 19 and the outer skin 20. The core material 42 sandwiched between the side sill 22 and the floor tunnel 39 is an integrally formed member, but is sectioned into a first section A in front of the front cross member 40, a second section B in front of the first section A, a third section C to the rear of the front cross member 40, and a fourth section D to the rear of the third section C (see FIG. 3 and FIG. 6).

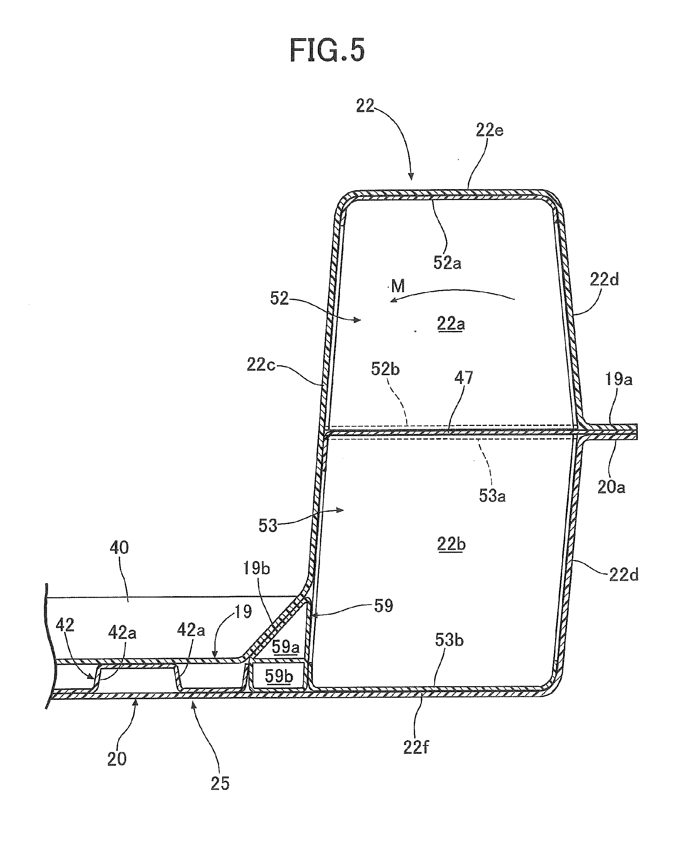

The first section A includes a plurality of concave-convex portions 42a extending as concentric ripple shapes with a front portion of the side sill 22 as a center O1, the outer end in the vehicle width direction of the concave-convex portions 42a being connected to the side sill 22, and the rear end of the concave-convex portions 42a being connected to the front cross member 40. The boundary line between the first section A and the second section B passes through the center O1, and the core material 42 of the second section B includes concave-convex portions 42b connected tangentially to the concave-convex portions 42a of the core material 42 of the first section A and extending in the fore-and-aft direction (see FIG. 1 and FIG. 5).

Furthermore, the third section C includes a plurality of concave-convex portions 42c extending as concentric ripple shapes with a rear portion of the side sill 22 as a center 02, the outer end in the vehicle width direction of the concave-convex portions 42c being connected to the side sill 22, and the front end of the concave-convex portions 42c being connected to the front cross member 40. The boundary line between the third section C and the fourth section D passes through the center 02, and the core material 42 of the fourth section B includes concave-convex portions 42d connected tangentially to the concave-convex portions 42c of the core material 42 of the third section C and extending in the fore-and-aft direction.

The inclined wall 37 of the dash panel 21 includes a corrugated core material 43 sandwiched between the inner skin 19 and the outer skin 20, and the vertical wall 38 of the dash panel 21 includes a corrugated core material 44 sandwiched between the inner skin 19 and the outer skin 20. The core material 43 of the inclined wall 37 includes concave-convex portions 43a extending in the fore-and-aft direction, and the concave-convex portions 43a are continuous with the concave-convex portions 42b of the second section B of the core material 42 of the front floor panel 25 (see FIG. 3). On the other hand, the core material 44 of the vertical wall 38 includes concave-convex portions 44a extending in the vehicle width direction, the concave-convex portions 43a of the core material 43 of the inclined wall 37 being perpendicular to the concave-convex portions 44a of the core material 44 of the vertical wall 38 (see FIG. 2).

The kick-up part 26 and the rear floor panel 27 respectively include corrugated core materials 45 and 46 sandwiched between the inner skin 19 and the outer skin 20, concave-convex portions 45a, 46a of the core materials 45 and 46 all extending in the vehicle width direction. Therefore, the concave-convex portions 42d of the fourth section D of the core material 42 of the front floor panel 25 are perpendicular to the concave-convex portions 45a of the core material 45 of the kick-up part 26 (see FIG. 2 and FIG. 3).

The side sill 22 is formed as a closed cross-section while having an inner wall 22c, an outer wall 22d, an upper wall 22e, and a lower wall 22f, and the front floor panel 25 is connected to the lower wall 22f (see FIG. 5). The interior of the side sill 22 is partitioned into an upper space 22a and a lower space 22b by means of a horizontally disposed front partition member 47 extending in the fore-and-aft direction (see FIG. 5). The outer end in the vehicle width direction of the front partition member 47 is sandwiched between the flange portions 19a and 20a of the inner skin 19 and outer skin 20, the inner end in the vehicle width direction is connected to the inner skin 19 forming the inner wall 22c of the side sill 22, and the front end is connected to a rear face of a wheel house rear wall 33a forming a front wall of the front pillar lower front part 33 (see FIG. 2).

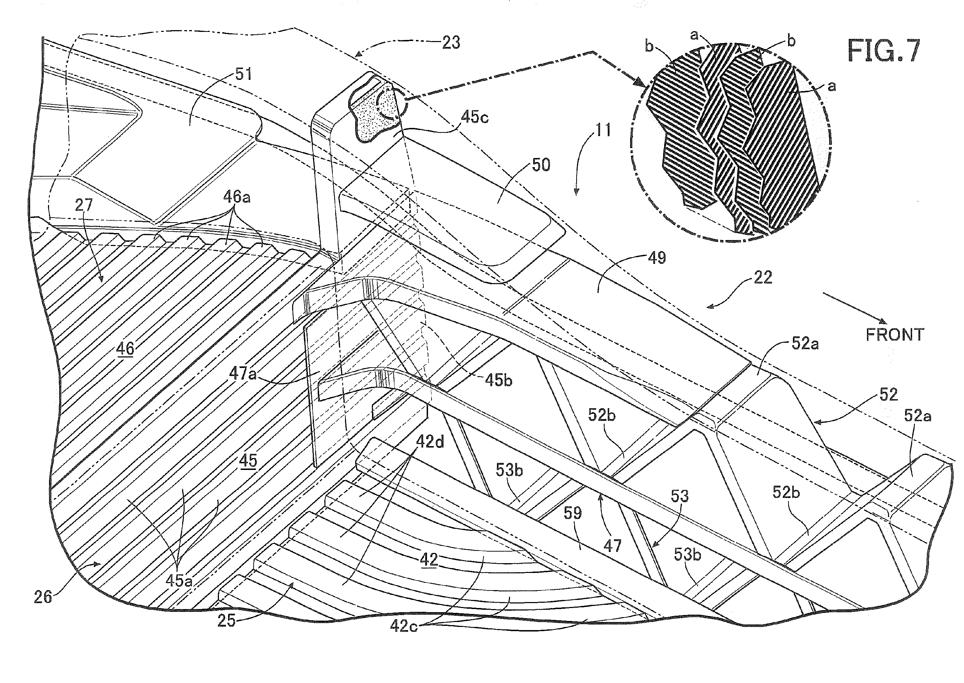

Furthermore, partition wall portions 45b and 45b projecting from opposite ends in the vehicle width direction of the core material 45 of the kick-up part 26 are connected to the outer wall 22d, the upper wall 22e, and the lower wall 22f of the side sill 22 in a state in which they are each fitted into the interior of the side sill 22, and a flange 47a, extending in the vehicle width direction, provided at the rear end of the front partition member 47 is connected to a front face of the partition wall portion 45b of the core material 45 in the interior of the side sill 22 (see FIG. 7).

A front linking plate 48 extending in the horizontal direction is disposed in the upper space 22a in a front part of the side sill 22 (see FIG. 2, FIG. 4, and FIG. 6). Left and right edges of the front linking plate 48 are connected to the inner wall 22c and the outer wall 22d of the side sill 22, the rear end is connected to a lower face of the upper wall 22e of the side sill 22, and the front end is connected to a rear face of the wheel house rear wall 33a forming a front wall of the front pillar lower front part 33. The width in the vehicle width direction of the front linking plate 48 widens on the inside in the vehicle width direction in going from the rear end toward the front end, and accompanying this a front pillar inner wall 33b of the front pillar lower front part 33 widens on the inside in the vehicle width direction in going toward the front (see FIG. 6).

A rear first linking plate 49 extending in the horizontal direction is disposed in the upper space 22a in a rear part of the side sill 22 (see FIG. 2, FIG. 4 and FIG. 7). Left and right edges of the rear first linking plate 49 are connected to the inner wall 22c and the outer wall 22d of the side sill 22, the front end is connected to the lower face of the upper wall 22e of the side sill 22, and the rear end is connected to a front face of a portion, fitted into the side sill 22, of the partition wall portion 45b of the core material 45 of the kick-up part 26. A rear second linking plate 50 extending in the horizontal direction is disposed above the rear first linking plate 49. The rear second linking plate 50 is formed so as to have a length in the fore-and-aft direction that is shorter than that of the rear first linking plate 49, left and right edges are connected to the inner wall 22c and the outer wall 22d of the side sill 22, the front end is connected to the lower face of the upper wall 22e of the side sill 22, and the rear end is connected to a front face of a flat portion 45c projecting upwardly from the upper end of the partition wall portion 45b of the core material 45 of the kick-up part 26.

The flat portion 45c of the core material 45, to which the rear end of the rear second linking plate 50 is connected, is formed not into a corrugated plate but a flat plate, and with regard to the direction of orientation of carbon sheets forming the flat portion 45c, as shown enlarged in a circle in FIG. 7, carbon sheets a in which carbon fibers are inclined downwardly through 45° from the outside toward the inside in the vehicle width direction and carbon sheets b in which carbon fibers are inclined upwardly through 45° from the outside toward the inside in the vehicle width direction are layered in turn.

The interior of the rear side frame 23 extending upwardly to the rear from the rear end of the side sill 22 is partitioned into an upper space 23 a and a lower space 23b by means of a rear partition member 51 extending in the fore-and-aft direction (see FIG. 3, FIG. 4 and FIG. 7). The front end of the rear partition member 51 is connected to the rear end of the rear first linking plate 49 of the side sill 22 with the core material 45 of the kick-up part 26 sandwiched therebetween.

An upper energy-absorbing member 52 is disposed in the upper space 22a of the side sill 22, and a lower energy-absorbing member 53 is disposed in the lower space 22b of the side sill 22 (see FIG. 2, FIG. 4 and FIG. 7). The upper energy-absorbing member 52 is formed from a plate material bent in a zig-zag manner, peak portions 52a at the upper end and valley portions 52b at the lower end alternating consecutively. Similarly, the lower energy-absorbing member 53 is formed from a plate material bent in a zig-zag manner, peak portions 53a at the upper end and valley portions 53b at the lower end alternating consecutively.

Left and right edges of the upper energy-absorbing member 52 and the lower energy-absorbing member 53 are connected to the inner wall 22c and the outer wall 22d of the side sill 22, the peak portions 52a of the upper energy-absorbing member 52 are connected to the lower face of the upper wall 22d of the side sill 22 and a lower face of the rear first linking plate 49, and the valley portions 53b of the lower energy-absorbing member 53 are connected to the lower wall 22f of the side sill 22. The plate thickness of the upper energy-absorbing member 52 is set so as to be smaller than the plate thickness of the lower energy-absorbing member 53. The valley portions 52b of the upper energy-absorbing member 52 and the peak portions 53a of the lower energy-absorbing member 53 are connected to the upper face and the lower face respectively of the front partition member 47, and in this arrangement the valley portions 53b and the peak portions 53a are connected so as to oppose each other with the front partition member 47 sandwiched therebetween.

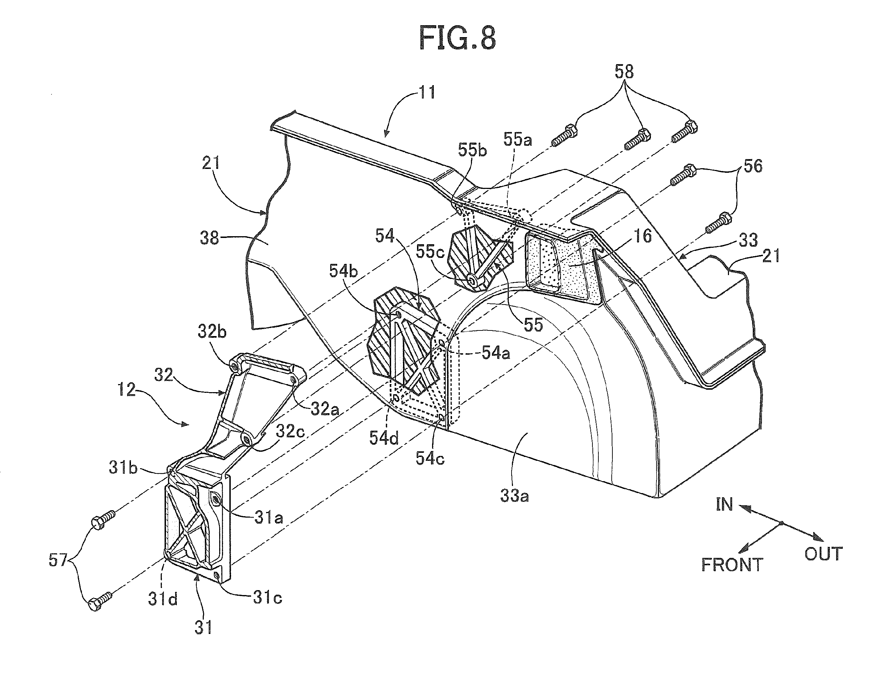

First and second insert members 54 and 55, both formed from an aluminum extrusion, are inserted in advance into an end part in the vehicle width direction of the vertical wall 38 of the dash panel 21 (see FIG. 8). The first insert member 54 is a rectangular flat member, and two bolt holes 54a and 54c and two female threaded holes 54b and 54d are formed in corners thereof. The second insert member 55 is a triangular shaped flat member, and three bolt holes 55a to 55c are formed in corners thereof. On the other hand, two female threaded holes 31a and 31c and two bolt holes 31b and 31d are formed in the rear end of the front side frame rear part 31 of the suspension support module 12, and three female threaded holes 32a to 32c are formed in the rear end of the damper housing 32 of the suspension support module 12.

The suspension support module 12 is secured to the front face of the dash panel 21 by screwing two bolts 56 and 56 extending through the two bolt holes 54a and 54c of the first insert member 54 from the front to the rear into the two female threaded holes 31 a and 31c of the front side frame rear part 31, screwing two bolts 57 and 57 extending through the two bolt holes 31b and 31d of the front side frame rear part 31 from the rear to the front into the female threaded hole 54b and 54d of the first insert member 54, and screwing three bolts 58 extending through the three bolt holes 55a to 55c of the second insert member 55 from the rear to the front into the three female threaded holes 32a to 32c of the damper housing 32.

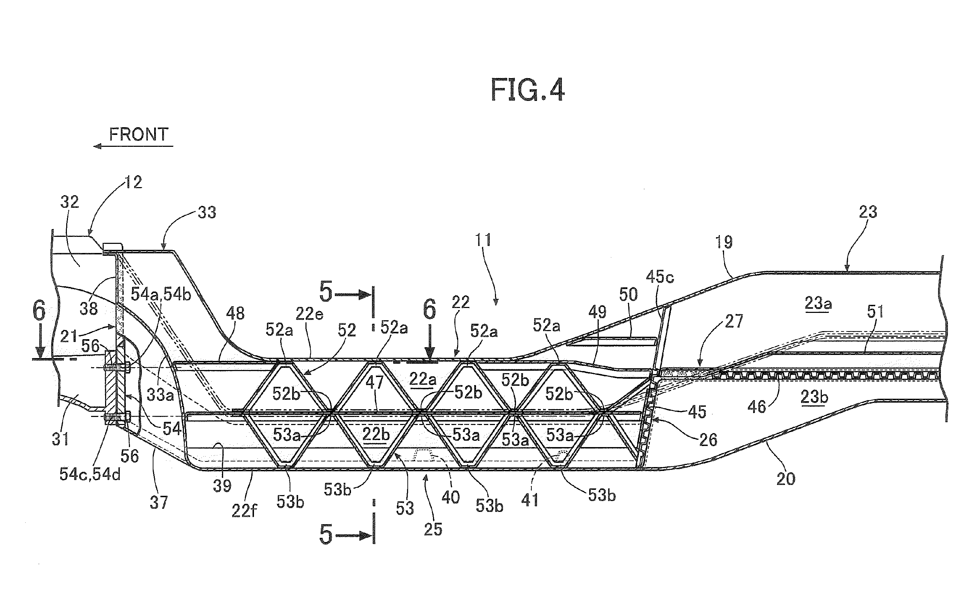

In this arrangement, among the two bolt holes 54a and 54c and the two female threaded holes 54b and 54d of the first insert member 54, the heights of the bolt hole 54a and the female threaded hole 54b on the upper side, are substantially coincident with the height of the front linking plate 48 of the side sill 22, and the heights of the bolt hole 54c and the female threaded hole 54d on the lower side are substantially coincident with the height of the front partition member 47 of the side sill 22 (see FIG. 4).

An inclined face 19b is formed in a portion of the inner skin 19, forming the upper face of the front floor panel 25, that rises upwardly and is connected to the inner wall 22c of the side sill 22 (see FIG. 1 and FIG. 5). The inclined face 19b is inclined so that its height increases gradually from the inside to the outside in the vehicle width direction, and a frame member 59 having a fixed cross section formed from a drawn carbon fiber-reinforced plastic or an aluminum alloy extrusion is disposed between a lower face of the inclined face 19b and the upper face of the outer skin 20 (see FIG. 5 to FIG. 7). The frame member 59 integrally includes a triangular cross section portion 59a on the upper side and a rectangular cross section portion 59b on the lower side, an inclined side of the triangular cross section portion 59a is adhered to the lower face of the inclined face 19b of the inner skin 19, and the bottom side of the rectangular cross section portion 59b is adhered to the upper face of the outer skin 20. The inclined face 19b and the frame member 59 reinforce a section where the front floor panel 25 and the side sill 22 are connected.

The operation of the embodiment of the present invention having the above arrangement is now explained.

Since the side sill 22 of the cabin 11 rises upwardly from the front floor panel 25, when the side sill 22 is involved in a side collision with another vehicle, a bending moment M (see FIG. 5) that works so as to collapse the side sill 22 inwardly in the vehicle width direction is generated by means of the collision load. In particular, when a side collision with a vehicle having a high bumper position such as an SUV occurs, since the collision load is inputted into a high position of the side sill 22, the bending moment M is large. However, in accordance with the present embodiment, the inner skin 19 positioned on the boundary between the inner wall 22c of the side sill 22 and the upper wall of the front floor panel 25 includes the inclined face 19b, which is inclined so that the outside in the vehicle width direction is high, and it is therefore possible to transmit the bending moment M, which works so as to collapse the side sill 22 inwardly in the vehicle width direction, to the front floor panel 25 via the inclined face 19b and support it, thus preventing the side sill 22 from collapsing without increasing the number of cross members of the front floor panel 25 or increasing the height of a cross member.

In this arrangement, since the inclined face 19b of the inner skin 19 and the outer skin 20 are connected via the frame member 59 extending in the fore-and-aft direction, it is possible to further reliably prevent the side sill 22 from collapsing by suppressing deformation of the inclined face 19b and transmitting the bending moment M to the outer skin 20 via the frame member 59. Moreover, since the frame member 59 is a tubular hollow member, the frame member 59 can be easily produced by extrusion molding or draw molding.

Furthermore, when the collision load of a side collision is inputted into the side sill 22, if the collision load is transmitted to the floor tunnel 39 via the front floor panel 25 without being dispersed in the fore-and-aft direction, there is a possibility that the floor tunnel 39, which is relatively brittle, will crumple and the side sill 22 will enter the vehicle compartment to thus reduce the vehicle compartment space. However, in accordance with the present embodiment, since the core material 42 sandwiched between the inner skin 19 and the outer skin 20 of the front floor panel 25 includes the concave-convex portions 42a extending in a ripple shape forwardly and inwardly in the vehicle width direction in the first section A in front of the front cross member 40, and the concave-convex portions 42c extending in a ripple shape rearwardly and inwardly in the vehicle width direction in the third section C to the rear of the front cross member 40 (see FIG. 3), the collision load of a side collision inputted into an intermediate part in the fore-and-aft direction of the side sill 22 is dispersed forwardly from the side sill 22 and the front cross member 40 via the concave-convex portions 42a, which curve smoothly, of the core material 42 of the first section A, is also dispersed rearwardly from the side sill 22 and the front cross member 40 via the concave-convex portions 42c, which curve smoothly, of the core material 42 of the third section C, and is efficiently absorbed, thereby preventing the floor tunnel 39 from crumpling and preventing the side sill 22 from moving inwardly in the vehicle width direction.

Furthermore, since the core material 42 is made of a fiber-reinforced plastic, compared with a case in which it is produced by press forming a metal plate, the concave-convex portions 42a, 42c can be formed so as to be deep and, moreover, since the core material 42 is sandwiched between the inner skin 19 and the outer skin 20 and the strength of the front floor panel 25 is enhanced, transmission of the collision load can be carried out efficiently. In particular, since the concave-convex portions 42a, 42c extend not only from the side sill 22 but also from the front cross member 40, it is possible to reliably transmit, to the concave-convex portions 42a, 42c, a collision load that has been transmitted from the side sill 22 to the front cross member 40.

Furthermore, since the core material 42 of the second section B in front of the first section A includes the concave-convex portions 42b extending forwardly and linearly from an end part of the concave-convex portions 42a with the ripple shape of the first section A, even if the dimension in the fore-and-aft direction of the core material 42 in front of the front cross member 40 is large, a collision load that has been dispersed forwardly can be transmitted to the dash panel 21 via the concave-convex portions 42b of the second section B; similarly, since the core material 42 of the fourth section D to the rear of the third section C includes the concave-convex portions 42d, which extend rearwardly and linearly from an end part of the concave-convex portions 42c with the ripple shape of the third section C, even if the dimension in the fore-and-aft direction of the core material 42 to the rear of the front cross member 40 is large, a collision load that has been dispersed rearwardly can be transmitted to the kick-up part 26 via the concave-convex portions 42d of the fourth section D.

Moreover, since the dash panel 21 includes the inclined wall 37, which extends on an incline obliquely upwardly from the front end of the front floor panel 25, and the vertical wall 38, which extends upwardly from the front end of the inclined wall 37, and the concave-convex portions 43a, extending linearly in the fore-and-aft direction, of the core material 43 sandwiched between the inner skin 19 and the outer skin 20 of the inclined wall 37 are connected to the concave-convex portions 42b, extending linearly in the fore-and-aft direction, of the core material 42 of the second section B of the front floor panel 25 (see FIG. 3), it is possible, by reliably transmitting and dispersing the collision load of a side collision, that has been dispersed forwardly, from the core material 42 of the second section B to the core material 43 of the inclined wall 37 of the dash panel 21, to reliably support a collision load that has been dispersed forwardly by means of the inclined wall 37 of the dash panel 21 even when the vertical wall 38 of the dash panel 21 is formed so as to be thin.

Furthermore, since the side sill 22 is partitioned into the upper space 22a and the lower space 22b by means of the front partition member 47, and the front end and the rear end of the front partition member 47 are connected to the dash panel 21 and the kick-up part 26 respectively, it is possible to reinforce the side sill 22 by means of the front partition member 47 and to disperse and absorb, between the dash panel 21 and the kick-up part 26, the collision load of a side collision inputted into the side sill 22. In particular, when a normal vehicle is involved in a side collision, since the collision load is inputted at the height of the front partition member 47 of the side sill 22, it is possible as a result of the effect of reinforcement by the front partition member 47 to prevent the cross section of the side sill 22 from collapsing.

Moreover, since the front pillar inner wall 33b of the front pillar lower front part 33 connected to the front of the side sill 22 widens on the inside in the vehicle width direction with respect to the inner wall 22c in the vehicle width direction of the side sill 22 (see FIG. 6), when the load of a side collision inputted into the side sill 22 is transmitted to the front pillar lower front part 33, it is possible by means of the front pillar lower front part 33, whose strength has increased, to prevent further effectively the side sill 22 from collapsing.

When a vehicle is involved with a side collision with a pole, etc., compared with a case in which it is involved with a side collision with a bumper beam of another vehicle, there is a possibility that a large load will be inputted locally into the side sill 22. In such a case, since the upper energy-absorbing member 52 is disposed within the upper space 22a of the side sill 22, and the lower energy-absorbing member 53 is disposed within the lower space 22b of the side sill 22, it is possible to absorb the collision energy by crumpling of the upper energy-absorbing member 52 and the lower energy-absorbing member 53 in addition to the front partition member 47, thus enabling protection of the vehicle compartment to be carried out.

When there is a side collision with a pole, etc. and the collision load is inputted over a wide range from the lower end to the upper end of the side sill 22, if a large collision load is applied to the upper end of the side sill 22, which is a long distance above the front floor panel 25, the bending moment M that works to collapse the side sill 22 will increase, but since the strength of the upper energy-absorbing member 52 is set so as to be smaller than the strength of the lower energy-absorbing member 53, the upper energy-absorbing member 52, which is normally difficult to crumple, and the lower energy-absorbing member 53, which is normally easy to crumple, are evenly crumpled to thus decrease the moment M, and a maximum energy-absorbing effect can be exhibited while minimizing collapsing of the side sill 22 inwardly in the vehicle width direction.

Furthermore, when the vehicle body is viewed from the side, since the upper energy-absorbing member 52 and the lower energy-absorbing member 53 have the peak portions 52a, 53a and the valley portions 52b, 53b in a continuous zig-zag shape, and the valley portions 52b of the upper energy-absorbing member 52 and the peak portions 53a of the lower energy-absorbing member 53 oppose each other with the front partition member 47 sandwiched therebetween (see FIG. 4), the valley portions 52b and the peak portions 53a are strongly integrated via the front partition member 47, the upper energy-absorbing member 52, the lower energy-absorbing member 53, and the front partition member 47 thus forming a large number of strong triangular shapes. This enables the energy-absorbing effect to be enhanced by reliably crumpling the upper energy-absorbing member 52, the lower energy-absorbing member 53, and the front partition member 47 when a concentrated collision load is inputted into the side sill 22 as a result of collision with a pole, etc.

Moreover, since the dash panel 21 includes the wheel house rear wall 33a extending while curving rearwardly to the front end of the side sill 22 from the vicinity of the first insert member 54 having the lower part of the suspension support module 12 secured thereto (see FIG. 4), and the upper wall 22e of the side sill 22 and the wheel house rear wall 33e are connected by means of the front linking plate 48 extending in a substantially horizontal direction, a collision load inputted from a tire into the wheel house rear wall 33a, particularly when involved in a narrow offset frontal collision, can be efficiently transmitted to the upper wall 22e of the side sill 22 via the front linking plate 48 and supported, thereby preventing the dash panel 21 from collapsing rearwardly and enabling the vehicle compartment space to be maintained. Moreover, since the interior of the side sill 22 is partitioned into the upper space 22a and the lower space 22b by means of the front partition member 47 extending in a substantially horizontal direction, and the front end of the front partition member 47 is connected to the wheel house rear wall 33a, it is possible to efficiently transmit the collision load of a frontal collision inputted into the wheel house rear wall 33a to the side sill 22 from the wheel house rear wall 33a via the front partition member 47 and support it.

Furthermore, since the width in the left-and-right direction of the front linking plate 48 increases inwardly in the vehicle width direction from the side sill 22 side as it approaches the first insert member 54 in going toward the wheel house rear wall 33a side (see FIG. 6), it is possible to further efficiently transmit the collision load of a frontal collision inputted into the dash panel 21 from the wheel house rear wall 33a to the side sill 22. Moreover, it is possible, by integrally joining the inner face of the side sill 22 and the front partition member 47 by means of the upper energy-absorbing member 52 and the lower energy-absorbing member 53 to thus enhance the bending stiffness, to further reliably support the collision load of a frontal collision.

In particular, since the height of the front linking plate 48 is made to substantially coincide with the height of the bolt hole 54a and the female threaded hole 54b, which are the upper fastening parts of the first insert member 54, and the height of the front partition member 47 is made to substantially coincide with the height of the bolt hole 54c and the female threaded hole 54d, which are the lower fastening parts of the first insert member 54 (see FIG. 4), it is possible to further efficiently transmit, from the wheel house rear wall 33a to the side sill 22 via the front linking plate 48 and the front partition member 47, the collision load of a frontal collision inputted into the first insert member 54 from the front side frame rear part 31 of the suspension support module 12.

Furthermore, since the front end of the rear floor panel 27 and the upper wall 22e of the side sill 22 are linked by the rear first linking plate 49 disposed within the rear part of the side sill 22 and extending in a substantially horizontal direction (see FIG. 7), it is possible, by enhancing the strength of the rear part of the side sill 22 rising upwardly to the rear by means of the rear first linking plate 49, to prevent the rear part of the side sill 22 from crumpling due to a collision load even when the rear part of the side sill 22 is involved in a side collision with a vehicle having a large vehicle height such as an SUV, as well as to efficiently transmit the collision load to the rear side frame 23 and the rear floor panel 27, thereby preventing the side sill 22 from collapsing inwardly in the vehicle width direction.

Moreover, since the interior of the rear side frame 23 is partitioned into the upper space 23a and the lower space 23b by means of the rear partition member 51, and the front end of the rear partition member 51 is linked to the rear end of the rear first linking plate 49, not only is it possible by means of the rear partition member 51 to prevent the rear side frame 23 from being crumpled by the collision load of a side collision, but it is also possible to further efficiently disperse, from the rear side frame 23 to the rear floor panel 27, the collision load of a side collision inputted into the side sill 22.

Furthermore, since the rear second linking plate 50 extending in a substantially horizontal direction above the rear first linking plate 49 is disposed within the rear part of the side sill 22, it is possible, by cooperation of the rear first linking plate 49 and the rear second linking plate 50, to further reliably prevent the rear part of the side sill 22 from crumpling when a collision load is inputted into the rear part of the side sill 22.

Moreover, since the core material 45 having the concave-convex portions 45a extending in the vehicle width direction is disposed the interior of the kick-up part 26 rising from the rear end of the front floor panel 25 toward the front end of the rear floor panel 27, the flat portion 45c of the partition wall portion 45b formed by extending the opposite ends in the vehicle width direction of the core material 45 of the kick-up part 26 is inserted into the interior of the side sill 22, and the rear end of the rear first linking plate 49 is connected to the flat portion 45c (see FIG. 7), when the collision load of a side collision is inputted into the rear part of the side sill 22, it is possible by means of the partition wall portion 45b formed by extending the core material 45 to prevent the side sill 22 and the rear side frame 23 from crumpling, and it is also possible to efficiently transmit the collision load of a side collision to the kick-up part 26 and support it.

Furthermore, since the fiber-reinforced plastic flat portion 45c extending upwardly from the partition wall portion 45b of the core material 45 of the kick-up part 26 is connected to the upper wall 22e of the side sill 22, and the flat portion 45c has at least a fiber orientation direction that is inclined downwardly from the outside toward the inside in the vehicle width direction (see FIG. 7), when the collision load of a side collision is inputted into the upper part of the side sill 22, it is possible to efficiently transmit the collision load to the core material 45 of the kick-up part 26 via the obliquely oriented fibers in the flat portion 45c.

### SECOND EMBODIMENT

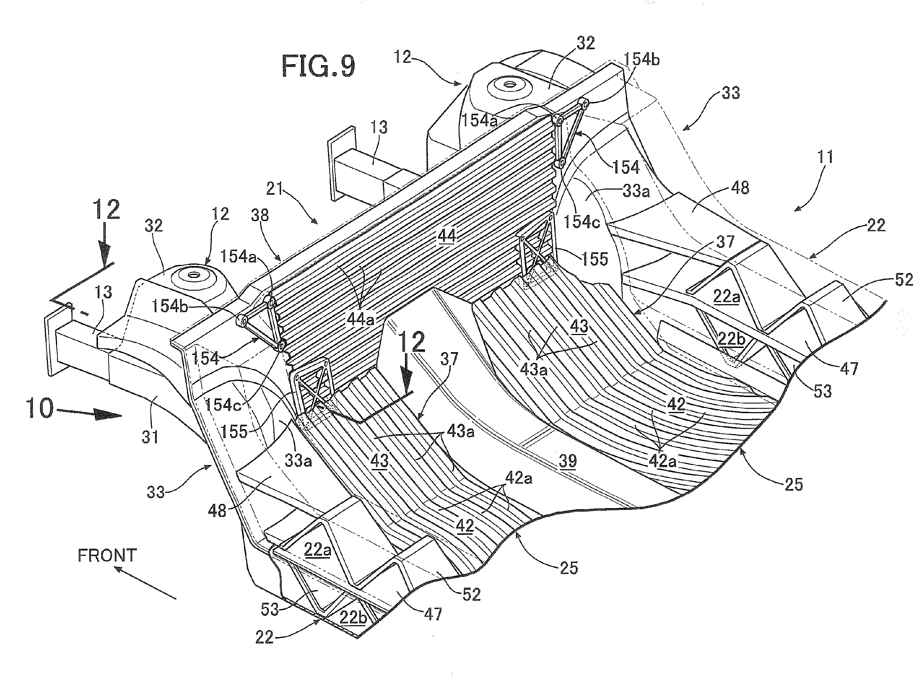

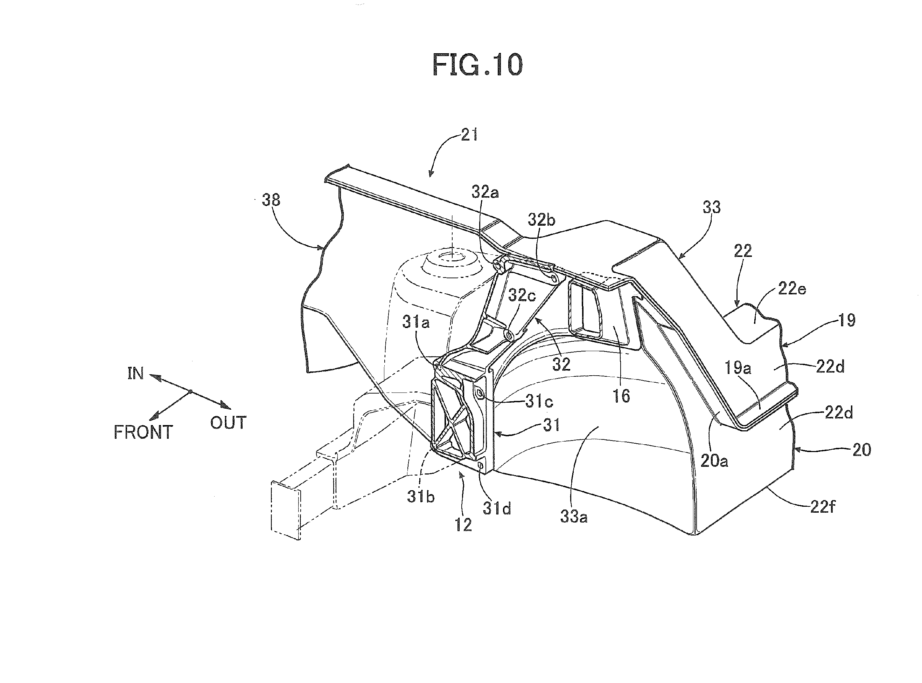

A second embodiment of the present invention is explained below by reference to FIG. 9 to FIG. 13.

A first insert member 154, formed from an aluminum extrusion, is disposed between an inner skin 19 and an outer skin 20 of a hollow closed cross-section front pillar lower front part 33 connected to an end part in the vehicle width direction of a vertical wall 38 of a dash panel 21, and a second insert member 155, formed from an aluminum extrusion, is sandwiched between the inner skin 19 and the outer skin 20 of the end part in the vehicle width direction of the vertical wall 38 of the dash panel 21 (see FIG. 9 and FIG. 11 to FIG. 13). The first insert member 154 is a triangular flat member, and first to third bolt holes 154a to 154c are formed in corners thereof. The second insert member 155 is a rectangular flat member, and first to fourth bolt holes 155a to 155d are formed in corners thereof. On the other hand, three bolt holes 32a to 32c are formed at the rear end of a damper housing 32 of a suspension support module 12, and four bolt holes 31a to 31d are formed at the rear end of a front side frame rear part 31 of the suspension support module 12.

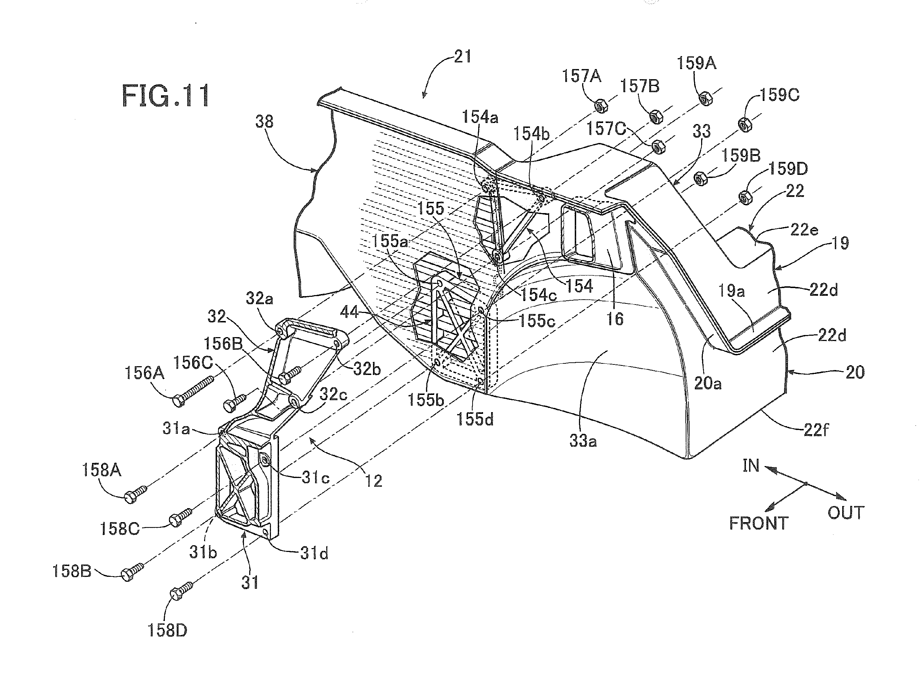

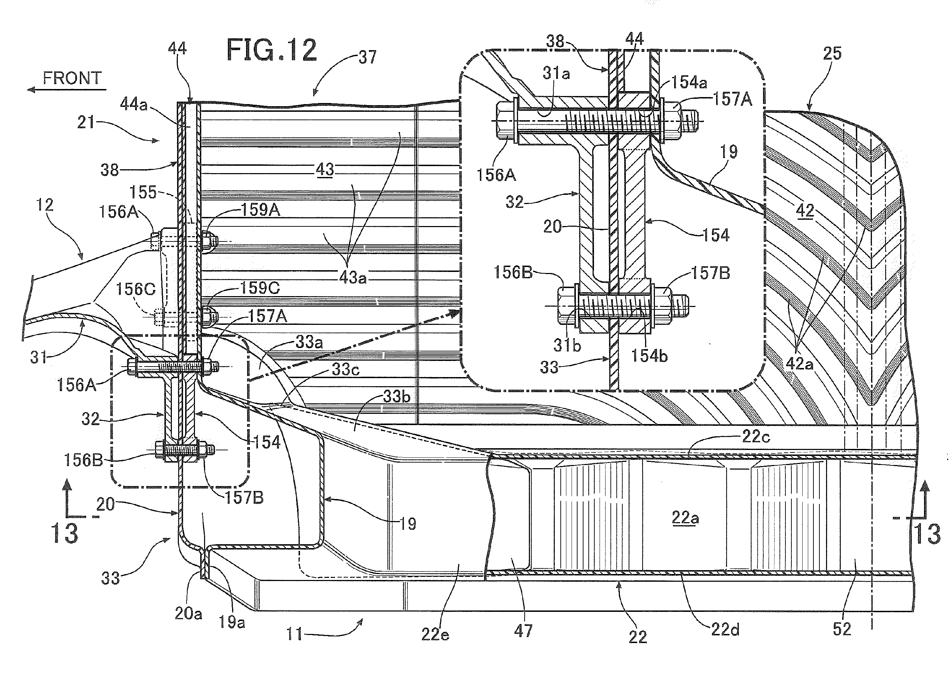

A vertical side joining the first bolt hole 154a and the third bolt hole 154c of the first insert member 154 is disposed so as to be in contact with an end part in the vehicle width direction of concave-convex portions 44a of a core material 44 of the vertical wall 38, and the second bolt hole 154b is positioned on the outside of the first bolt hole 154a in the vehicle width direction (see FIG. 9). The front pillar lower front part 33 includes a wheel house rear wall 33a formed from a curved wall including the inner skin 19 and the outer skin 20 (see FIG. 9 to FIG. 11 and FIG. 13), and a front pillar inner wall 33b, including the inner skin 19, connected to the wheel house rear wall 33a via a bent portion 33c (see FIG. 12), and the third bolt hole 154c of the first insert member 154 is positioned in the vicinity of the bent portion 33c. On the other hand, since the second insert member 155 is disposed so that a vertical side joining the third bolt hole 155c and the fourth bolt hole 155d is on the inside, in the vehicle width direction, of the bent portion 33c and is in contact with an outer end in the vehicle width direction of the concave-convex portions 44a of the core material 44 of the vertical wall 38, the entirety thereof is embedded in the core material 44 (see FIG. 9 and FIG. 11).

Bolts 156A and 156C inserted into the bolt holes 32a and 32c of the damper housing 32 of the suspension support module 12 extend through the outer skin 20, the first and third bolt holes 154a and 154c of the first insert member 154, and the inner skin 19 and are screwed into nuts 157A and 157C, and a bolt 156B inserted into the bolt hole 32b of the damper housing 32 of the suspension support module 12 extends through the outer skin 20 and the second bolt hole 154b of the first insert member 154 and is screwed into a nut 157B.

Furthermore, four bolt bolts 158A, 158B, 158C, and 158D inserted into the four bolt holes 31a to 31d of the front side frame rear part 31 of the suspension support module 12 extend through the outer skin 20, the first to fourth bolt holes 155a to 1155d of the second insert member 155, and the inner skin 19 and are screwed into four nuts 159A, 159B, 159C, and 159D, and the suspension support module 12 is thereby secured to a front face of the vertical wall 38 of the dash panel 21 (see FIG. 11).

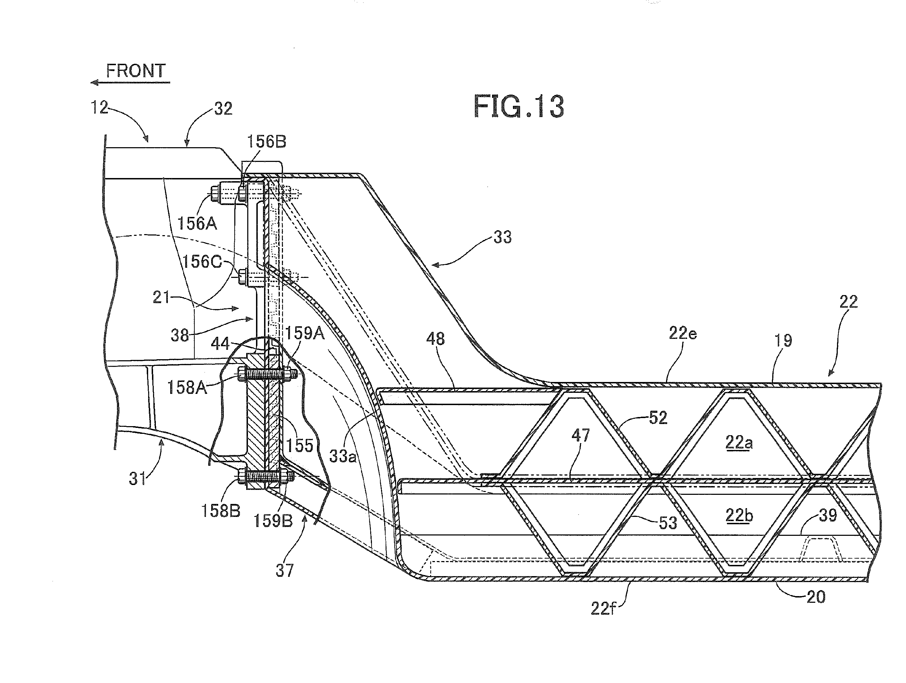

The side sill 22 is formed as a closed cross-section while having an inner wall 22c, an outer wall 22d, an upper wall 22e, and a lower wall 22f, and the front floor panel 25 is connected to the lower wall 22f. The interior of the side sill 22 is partitioned into an upper space 22a and a lower space 22b by means of a horizontally disposed front partition member 47 extending in the fore-and-aft direction (see FIG. 13). The outer end in the vehicle width direction of the front partition member 47 is sandwiched between joining flanges 19a and 20a of the inner skin 19 and outer skin 20, the inner end in the vehicle width direction is connected to the inner skin 19 forming the inner wall 22c of the side sill 22, and the front end is connected to a rear face of the wheel house rear wall 33a of the outer skin 20 forming a front wall of the front pillar lower front part 33 (see FIG. 13).

A front linking plate 48 extending in the horizontal direction is disposed in the upper space 22a in a front part of the side sill 22 (see FIG. 9 and FIG. 13). Left and right edges of the front linking plate 48 are connected to the inner wall 22c and the outer wall 22d of the side sill 22, the rear end is connected to a lower face of the upper wall 22e of the side sill 22, and the front end is connected to the rear face of the wheel house rear wall 33a of the outer skin 20 forming the front wall of the front pillar lower front part 33. The width in the vehicle width direction of the front linking plate 48 increases inwardly in the vehicle width direction in going from the rear end toward the front end (see FIG. 9), and accompanying this the front pillar inner wall 33b of the front pillar lower front part 33 widens inwardly in the vehicle width direction (see FIG. 12).

An upper energy-absorbing member 52 formed from a plate material bent in a zig-zag manner is disposed in the upper space 22a of the side sill 22, and a lower energy-absorbing member 53 formed from a plate material bent in a zig-zag manner is disposed in the lower space 22b of the side sill 22 (see FIG. 9 and FIG. 13).

The operation of the second embodiment of the present invention having the above arrangement is now explained.

When a vehicle is involved in a frontal collision, the collision load is inputted into the front face of the vertical wall 38 of the dash panel 21 from a bumper beam 28 via a bumper beam extension 29, a front side frame front part 13, and the front side frame rear part 31, and also inputted into a front face of the front pillar lower front part 33 via the damper housing 32, which is integral with the front side frame rear part 31.

The damper housing 32 of the suspension support module 12 is secured to the first insert member 154 embedded in the front pillar lower front part 33 by means of the three bolts 156A to 156C and the three nuts 157A to 157C, and the front side frame rear part 31 of the suspension support module 12 is secured to the second insert member 155 embedded in the vertical wall 38 by means of the four bolts 158A to 158D and the four nuts 159A to 159D (see FIG. 11).

In this arrangement, since the bolt 156A and the bolt 156C extend through the damper housing 32, the outer skin 20, the first insert member 154, and the inner skin 19, it is possible to strongly integrate the outer skin 20, the first insert member 154, and the inner skin 19 and reliably transmit to the dash panel 21 the collision load of a frontal collision inputted into the damper housing 32.

Furthermore, since the third bolt hole 154c of the first insert member 154 is positioned in the vicinity of the bent portion 33c on the border between the wheel house rear wall 33a and the front pillar inner wall 33b of the inner skin 19 of the front pillar lower front part 33 (see FIG. 12), it is possible to disperse the collision load inputted into the first insert member 154 to the front pillar lower front part 33 via the bent portion 33c, which has a high strength.

Moreover, since the second bolt hole 154b of the first insert member 154 is positioned in a middle part in the vehicle width direction of the front pillar lower front part 33, which is separated from the vertical wall 38 to the outside in the vehicle width direction, it is possible to reliably transmit a collision load, inputted into the outside in the vehicle width direction of the first insert member 154, to the front pillar lower front part 33 to thus absorb it.

Furthermore, since the first bolt hole 154a, the second bolt hole 154b, and the third bolt hole 154c of the first insert member 154 are disposed in a triangular shape, it is possible to strongly integrate the first bolt hole 154a, the second bolt hole 154b, and the third bolt hole 154c to thus enhance the stiffness of the first insert member 154, and it is possible to disperse the collision load of a frontal collision inputted into the damper housing 32 from the first insert member 154 to the front pillar lower front part 33 and the vertical wall 38 to thus efficiently absorb it.

Moreover, since the vertical wall 38 includes the corrugated core material 44 sandwiched between the inner skin 19 and the outer skin 20, the second insert member 155 is inserted into the vertical wall 38 beneath the first insert member 154 and in the vicinity of the wheel house rear wall 33a of the front pillar lower front part 33, and the concave-convex portions 44a of the core material 44 abut against the second insert member 155 (see FIG. 9), it is possible to reliably transmit the collision load of a frontal collision, inputted from the front side frame rear part 31 into the second insert member 155 of the vertical wall 38, to the vertical wall 38 via the core material 44, and to further transmit it therefrom to the wheel house rear wall 33a of the front pillar lower front part 33 to efficiently absorb it.

Furthermore, since a cabin 11 includes the side sill 22 connected to the rear of the front pillar lower front part 33, and the front end of the front linking plate 48 extending forwardly from the lower face of the upper wall 22e of the side sill 22 is connected to the wheel house rear wall 33a (see FIG. 13), it is possible to efficiently transmit the collision load of a frontal collision, inputted into the second insert member 155 from the front side frame rear part 31 or the damper housing 32, to the side sill 22 from the wheel house rear wall 33a via the front linking plate 48, thus preventing the dash panel 21 from moving back toward the vehicle compartment side.

Moreover, since the front side of the front linking plate 48 widens inwardly in the vehicle width direction toward the second insert member 155 (see FIG. 9), it is possible to further efficiently transmit, from the wheel house rear wall 33a to the side sill 22 via the front linking plate 48, the collision load of a frontal collision inputted into the second insert member 155. Furthermore, since the front partition member 47 is provided so as to partition the interior of the side sill 22 into the upper space 22a and the lower space 22b, and the front end of the front partition member 47 is connected to the wheel house rear wall 33a, it is possible, in cooperation with the front linking plate 48, to efficiently transmit, from the wheel house rear wall 33a to the side sill 22 via the front partition member 47, the collision load of a frontal collision inputted into the second insert member 155 from the front side frame rear part 31 thus preventing the dash panel 21 from moving back toward the vehicle compartment side.

Embodiments of the present invention are explained above, but the present invention may be modified in a variety of ways as long as the modifications do not depart from the spirit and scope thereof.

For example, in the embodiments the cabin 11, etc. is formed from a carbon fiber-reinforced plastic, but it may be formed from a fiber-reinforced plastic (fiber-reinforced resin) employing a fiber other than a carbon fiber.

## Claims

1. A fiber-reinforced plastic cabin for a vehicle, in which a fiber-reinforced plastic cabin (11) formed by joining an inner skin (19) positioned on an inside of a vehicle compartment and an outer skin (20) positioned on an outside of the vehicle compartment comprises at least a floor panel (25) and side sills (22) connected to opposite sides in a vehicle width direction of the floor panel (25), wherein
an inclined face (19b) extending in a fore-and-aft direction is formed in the inner skin (19) on a border between the floor panel (25) and the side sill (22), and the inclined face (19b) and the outer skin (20) are joined by a frame member (59) extending in the fore-and-aft direction.

2. The fiber-reinforced plastic cabin for a vehicle according to Claim 1, wherein the frame member (59) is a tubular hollow member.

3. The fiber-reinforced plastic cabin for a vehicle according to Claim 1 or Claim 2, wherein the side sill (22) is partitioned into an upper space (22a) and a lower space (22b) by means of a partition member (47), a front end and a rear end of the partition member (47) are respectively connected to a front wall (21) and a rear wall (26) of the cabin (11), an upper energy-absorbing member (52) is disposed within the upper space (22a), and a lower energy-absorbing member (53) is disposed within the lower space (22b).

4. The fiber-reinforced plastic cabin for a vehicle according to Claim 3, wherein the floor panel (25) is connected to the lower space (22b), and the strength of the upper energy-absorbing member (52) is set lower than the strength of the lower energy-absorbing member (53).

5. The fiber-reinforced plastic cabin for a vehicle according to Claim 3 or Claim 4, wherein when the vehicle body is viewed from the side, the upper energy-absorbing member (52) and the lower energy-absorbing member (53) comprise a peak portion (52a, 53a) and a valley portion (52b, 53b) in a continuous zig-zag shape, and the valley portion (52b) of the upper energy-absorbing member (52) and the peak portion (53a) of the lower energy-absorbing member (53) oppose each other with the partition member (47) interposed therebetween.

6. The fiber-reinforced plastic cabin for a vehicle according to any one of Claim 1 to Claim 5, wherein the floor panel (25) comprises a core material (42) sandwiched between the inner skin (19) and the outer skin (20), a front half of the core material (42) on the left and right sandwiching a vehicle body center line comprises a concave-convex portion (42a) formed into a ripple shape with as a center (O1) a front side of the side sill (22) connected to the front half of the core material (42), and a rear half of the core material (42) on the left and right sandwiching the vehicle body center line comprises a concave-convex portion (42c) formed into a ripple shape with as a center (02) a rear side of the side sill (22) connected to the rear half of the core material (42).

7. The fiber-reinforced plastic cabin for a vehicle according to any one of Claim 1 to Claim 6, wherein an inner wall (33b) in a vehicle width direction of a front pillar lower front part (33) connected to the front of the side sill (22) widens on the inside in the vehicle width direction with respect to a vehicle width direction inner wall (22c) of the side sill (22).

8. The fiber-reinforced plastic cabin for a vehicle according to Claim 1, wherein the cabin (11) comprises left and right rear side frames (23) rising from a rear part of the side sill (22) upwardly to the rear and extending to the rear, and a front end of a rear floor panel (27) providing a connection between the left and right rear side frames (23) and an upper wall (22e) of the side sill (22) are linked by a first linking plate (49) disposed within a rear part of the side sill (22) and extending in a substantially horizontal direction.

9. The fiber-reinforced plastic cabin for a vehicle according to Claim 8, wherein an interior of the rear side frame (23) is partitioned into an upper space (23a) and a lower space (23b) by a rear partition member (51), and a front end of the rear partition member (51) is linked to a rear end of the first linking plate (49).

10. The fiber-reinforced plastic cabin for a vehicle according to Claim 8 or Claim 9, wherein an interior of the side sill (22) is partitioned into an upper space (22a) and a lower space (22b) by a front partition member (47), an energy-absorbing member (52, 53) is disposed in each of the upper space (22a) and the lower space (22b) of the side sill (22), the inclined face (19b) extending in the fore-and-aft direction is formed on the border between the side sill (22) and the front floor panel (25) connecting the left and right side sills (22), and a core material (42) is disposed in the interior of the front floor panel (25).

11. The fiber-reinforced plastic cabin for a vehicle according to any one of Claim 8 to Claim 10, wherein a second linking plate (50) extending in a substantially horizontal direction is disposed above the first linking plate (49) within the rear part of the side sill (22).

12. The fiber-reinforced plastic cabin for a vehicle according to any one of Claim 8 to Claim 11, wherein a core material (45) having a concave-convex portion (45a) extending in the vehicle width direction is disposed in an interior of a kick-up part (26) rising from a rear end of the front floor panel (25) toward the front end of the rear floor panel (27), a partition wall portion (45b) formed by extending opposite ends in the vehicle width direction of the core material (45) of the kick-up part (26) is inserted into the interior of the side sill (22), and the rear end of the first linking plate (49) is linked to the partition wall portion (45b).

13. The fiber-reinforced plastic cabin for a vehicle according to Claim 12, wherein the partition wall portion (45b) formed from a fiber-reinforced plastic extends upwardly from the core material (45) of the kick-up part (26) and is connected to the upper wall (22e) of the side sill (22), and the partition wall portion (45b) has at least a fiber orientation direction that is inclined downwardly from the outside to the inside in the vehicle width direction.

14. The fiber-reinforced plastic cabin for a vehicle according to Claim 1, wherein a vertical wall (38) positioned at a front end of the cabin (11) and a front pillar lower (33) connected to the outside in the vehicle width direction of the vertical wall (38) are formed by joining the inner skin (19) and the outer skin (20), a first insert member (154) inserted into the front pillar lower (33) comprises a first fastening portion (154a) positioned in the vicinity of a border between the first insert member (154) and the vertical wall (38), and the vertical wall (38) and a damper housing (32) disposed in front of the front pillar lower (33) are secured to the first fastening portion (154a).

15. The fiber-reinforced plastic cabin for a vehicle according to Claim 14, wherein the damper housing (32), the outer skin (19), the first fastening portion (154a), and the inner skin (19) are superimposed on one another and secured by a bolt (156A).

16. The fiber-reinforced plastic cabin for a vehicle according to Claim 15, wherein the first insert member (154) comprises a second fastening portion (154b) on the outside in the vehicle width direction relative to the first fastening portion (154a), and the damper housing (32) is secured to the second fastening portion (154b) by a bolt (156B).

17. The fiber-reinforced plastic cabin for a vehicle according to Claim 16, wherein the inner skin (19) of the front pillar lower (33) comprises a front pillar inner wall (33b) and a wheel house rear wall (33a) that is continuous with the underneath of the front pillar inner wall (33b) via a bent portion (33c), the first insert member (154) comprises a third fastening portion (154c) positioned adjacent to the bent portion (33c), and the damper housing (32) is secured to the third fastening portion (154c) by a bolt (156C).

18. The fiber-reinforced plastic cabin for a vehicle according to Claim 17, wherein the first fastening portion (154a), the second fastening portion (154b), and the third fastening portion (154c) are disposed in a triangular shape.

19. The fiber-reinforced plastic cabin for a vehicle according to any one of Claim 14 to Claim 18, wherein the vertical wall (38) comprises a corrugated core material (44) sandwiched between the inner skin (19) and the outer skin (20), a second insert member (155) is inserted into the vertical wall (38), which is beneath the first insert member (154) and in the vicinity of a wheel house rear wall (33a) of the front pillar lower (33), a concave-convex portion (44a) of the core material (44) abuts against the second insert member (155), and a front side frame (31) is secured to the second insert member (155).

20. The fiber-reinforced plastic cabin for a vehicle according to Claim 19, wherein the front side frame (31) is formed so as to be integral with the damper housing (32).

21. The fiber-reinforced plastic cabin for a vehicle according to Claim 19 or Claim 20, wherein the cabin (11) comprises the side sill (22) connected to the rear of the front pillar lower (33), and a front end of a linking plate (48) extending forwardly from a lower face of the upper wall (22e) of the side sill (22) is connected to the wheel house rear wall (33a) of the front pillar lower (33).

22. The fiber-reinforced plastic cabin for a vehicle according to Claim 21, wherein a front side of the linking plate (48) widens on the inside in the vehicle width direction in going toward the second insert member (155).

23. The fiber-reinforced plastic cabin for a vehicle according to Claim 21 or Claim 22, wherein the cabin comprises a partition member (47) partitioning the interior of the side sill (22) into an upper space (22a) and a lower space (22b), and a front end of the partition member (47) is connected to the wheel house rear wall (33a).

24. The fiber-reinforced plastic cabin for a vehicle according to Claim 14, wherein the vertical wall (38) of the cabin (11) comprises a wheel house rear wall (33a) that extends from a front side frame fastening part (54) to a front end of the side sill (22) while curving rearwardly therefrom, the front side frame fastening part (54) securing a front side frame (13, 31), and an upper wall (22e) of the side sill (22) and the wheel house rear wall (33a) are linked by a linking plate (48) extending in a substantially horizontal direction.

25. The fiber-reinforced plastic cabin for a vehicle according to Claim 24, wherein the width in the left-and-right direction of the linking plate (48) increases in going from the side sill (22) side to the wheel house rear wall side (33a) so as to approach the front side frame fastening part (54).

26. The fiber-reinforced plastic cabin for a vehicle according to Claim 25, wherein the interior of the side sill (22) is partitioned into an upper space (22a) and a lower space (22b) by a partition member (47) extending in a substantially horizontal direction, and a front end of the partition member (47) is linked to the wheel house rear wall (33a).

27. The fiber-reinforced plastic cabin for a vehicle according to Claim 26, wherein the front side frame fastening part (54) is formed from an upper fastening portion (54a, 54b) and a lower fastening portion (54c, 54d), the linking plate (47) is linked to the wheel house rear wall (33a) at a height that is substantially the same as that of the upper fastening portion (54a, 54b), and the partition member (47) is linked to the wheel house rear wall (33a) at a height that is substantially the same as that of the lower fastening portion (54c, 54d).

28. The fiber-reinforced plastic cabin for a vehicle according to Claim 26 or Claim 27, wherein an energy-absorbing member (52, 53) is disposed in each of the upper space (22a) and the lower space (22b) of the side sill (22).
